# EUROPÄISCHE PATENTSCHRIFT

(11) **EP 3 164 552 B1**
(45) Veröffentlichungstag und Bekanntmachung des Hinweises auf die Patenterteilung: **25.04.2018**
(21) Anmeldenummer: 15733699.1
(22) Anmeldetag: 30.06.2015
(51) Int. Cl.: E04F 10/10, E06B 7/098, E06B 9/28, E06B 9/386, E04B 7/16

(54) **LAMELLENDACH**
SLATTED ROOF
TOIT À LAMELLES

(30) Priorität: 02.07.2014 DE 102014212867
(43) Veröffentlichungstag der Anmeldung: 10.05.2017
(73) Patentinhaber: Klimasky GmbH, 88046 Friedrichshafen (DE)
(72) Erfinder: KRASS, Reinaldo, 61352 Bad Homburg (DE)
(74) Vertreter: Herrmann, Jochen
(86) Internationale Anmeldenummer: PCT/EP2015/064773
(87) Internationale Veröffentlichungsnummer: WO 2016/001183

(56) Entgegenhaltungen:
- AU-B2- 734 686
- DE-A1-102009 052 904
- FR-A1- 2 284 747
- US-B2- 8 413 705

## Beschreibung

Die vorliegende Erfindung betrifft ein Lamellendach. Die Lamelle des erfindungsgemäßen Lamellendachs umfasst ein lichtdurchlässiges flächiges Abdeckelement mit einer Längserstreckung und einer Breite, wobei die Breite kleiner als die Längserstreckung ist, und mit einer Drehachse, die entlang der Längserstreckung der Lamelle verläuft, um sie zwischen einer geschlossenen Stellung und einer geöffneten Stellung zu verstellen.

Ferner betrifft die Erfindung ein Lamellendach mit einer Trägerstruktur und mehreren parallel zueinander angeordneten Lamellen, die jeweils um eine entlang ihrer Längserstreckung verlaufende Achse an der Trägerstruktur drehbar gelagert sind, um die Lamellen zwischen einer geschlossenen Stellung und einer geöffneten Stellung zu verstellen.

Lamellendächer und Lamellenfenster sind in den verschiedensten Ausführungen seit Langem bekannt und gebräuchlich. Diese weisen mehrere parallel zueinander verlaufende Lamellen auf. Die jeweiligen Lamellen können aus einem lichtdurchlässigen, einem lichtundurchlässigen oder einem teiltransparenten Material bestehen. Lichtundurchlässige Lamellen werden unter anderem aus Metall, Kunststoff oder Holz hergestellt. Lichtdurchlässige Lamellen können aus Glas oder Kunststoff, insbesondere aus Polycarbonat oder Polymethylmethacrylat (Acrylglas) hergestellt sein. Die Lamellen verlaufen mit ihrer Längserstreckung parallel zueinander und können einzeln und/oder gruppenweise um eine entlang der Längserstreckung der jeweiligen Lamelle verlaufende Drehachse verschwenkt werden. Die Lamellen sind über einen Betätigungsmechanismus zum Einstellen des Neigungswinkels um ihre Drehachsen verbunden.

Während Lamellendächer üblicherweise eine horizontale Flächenerstreckung aufweisen und z.B. über Terrassen, Balkonen und Wintergärten, oder als Oberlichter angeordnet sind, haben Lamellenfenster üblicherweise eine vertikale Flächenerstreckung.

Im Folgenden beziehen sich die Erörterungen im Wesentlichen auf Lamellendächer.

Die Wirkungsweise von Lamellendächern mit im Wesentlichen lichtundurchlässigen Lamellen beruht darauf, dass aufgrund der veränderbaren Neigung der Lamellen einerseits eine Lüftung, andererseits eine Regulierung des Sonneneinfalls und der Lichtintensität in dem darunter liegenden Raum ermöglicht wird.

Ein Nachteil dieser Lamellendächer besteht darin, dass die Lichtundurchlässigkeit der Lamellen zu großen Einschränkungen führt. Insbesondere zum Schutz vor Witterungseinflüssen wie Regen, Hagel, Schnee und Wind müssen die Lamellen in eine vollständig geschlossene Stellung gebracht werden, da ansonsten keine Dichtigkeit gegeben ist. Aufgrund der Lichtundurchlässigkeit der Lamellen ist der darunter befindliche Raum dann jedoch relativ dunkel, da über das Dach kein Sonnenlicht mehr in den Raum gelangen kann, und dies hauptsächlich an ohnehin bereits dunklen Tagen.

Aus diesem Grund sind aus dem Stand der Technik auch Lamellendächer mit Lamellen aus einem lichtdurchlässigen Material bekannt. Lichtdurchlässige Lamellen haben den Vorteil, dass der darunter befindliche Raum bei vollständig geschlossener Stellung der Lamellen vor Witterungseinflüssen geschützt werden kann, wobei dennoch aufgrund der Lichtdurchlässigkeit der Lamellen Sonnenlicht von außen in den Raum gelangen kann. Nachteilig ist dabei jedoch, dass sich der Raum durch das eintretende Sonnenlicht, insbesondere durch dessen infraroten Strahlungsanteil, aufheizen kann. In dieser geschlossenen Stellung, kann die Wärme nicht nach oben aus dem Raum abziehen und es kommt zu einem Hitzestau unter dem Lamellendach. Und selbst in geöffneter Position der Lamellen würde sich bei starker Sonneneinwirkung der darunter befindliche Raum trotz Lüftung aufheizen. Ein weiterer Nachteil ist die Tatsache, dass eine Regulierung der Lichtintensität praktisch nicht möglich ist, da durch die Lichtdurchlässigkeit der Lamellen ein Abdunkeln des entsprechenden Raumes nicht erreicht werden kann. Des Weiteren kann sich bei Sonnenstrahlung ein Blendeffekt durch reflektierte Sonnenstrahlen ergeben, der oft als unangenehm empfundenen wird.

Dokument FR 2 284 747 offenbart ein Lamellendach gemäß dem Oberbegriff des Anspruchs 1.

Ein ähnliches Lamellendach ist aus Dokument AU 200032540 B2 bekannt.

Ein ähnliches Lamellendach ist auch aus Dokument US 8 413 705 B2 bekannt.

Aufgrund dieser Probleme sind im Stand der Technik für lichtdurchlässige Lamellen verschiedene Maßnahmen vorgeschlagen worden. Diese umfassen beispielsweise eine auf das transparente Material der Lamellen zumindest bereichsweise aufgebrachte Beschichtung, die Infrarotstrahlung reflektiert. Ferner ist es beispielsweise aus der DE 10 2010 031 714 A1 bekannt, auf den Lamellen von dem abzuschattenden Raum aus Abschattungsmittel lösbar zu befestigen. Die Lamellen wären in dem Fall allerdings kaum noch lichtdurchlässig. Das manuelle Anbringen der Abschattungsmittel auf der Innenseite der Lamellen ist jedoch auch sehr aufwendig und zeitintensiv. Außerdem müssen die Abschattungsmittel in einem Lagerraum vorgehalten werden, um sie bei Bedarf dann kurzfristig von Innen an den Lamellen zu befestigen.

Ein weiterer Aspekt, der bei herkömmlichen Lamellendächern zu beachten ist, ist deren Tragfähigkeit. Die Lamellen sind in geschlossenem Zustand aufgrund ihrer im Wesentlichen horizontalen zweidimensionalen Flächenerstreckung und ihrer mangelnden Steifigkeit nur beschränkt tragfähig insbesondere bezüglich Schneelast. Daher müssen diese Lamellendächer, um nicht beschädigt zu werden, bei stärkeren Schneefällen geöffnet werden, wodurch der Schnee in den darunter gelegenen Raum gelangt.

Aus diesem Grund sind im Stand der Technik Lamellendächer zum Teil mit Lamellen versehen, die über eine stabilisierende Rahmenstruktur verfügen, beispielsweise aus Aluminium, Stranggussprofilen o.ä., in welchen dann ein Abdeckelement aus transparentem oder lichtundurchlässigem Material eingesetzt wird (vergleiche DE 10 2010 031 714 A1). Die einzelnen Lamellen bestehen dann aus der stabilisierenden Rahmenstruktur und dem darin eingesetzten Abdeckelement. Das macht die Lamellen recht aufwändig in der Konstruktion und vor allem sehr schwer. Aus diesem Grund können besonders stabile und/oder selbsthemmende Betätigungsmechanismen zum Verstellen des Drehwinkels der Lamellen erforderlich werden (vergleiche beispielsweise DE 10 2010 031 714 A1). Außerdem stellt die meist aus Metall bestehende Rahmenstruktur eine unerwünschte Kältebrücke dar.

Ausgehend von dem beschriebenen Stand der Technik liegt der vorliegenden Erfindung die Aufgabe zugrunde,
Lamelle des erfindungsgemäßen Lamellendachs der eingangs genannten Art dahingehend auszugestalten und weiterzubilden, dass sie einerseits in geschlossener Stellung, in der sie zuverlässig vor Witterungseinflüssen schützen sollen, Lichteinfall und Tragfähigkeit gewährleisten sowie eine Überhitzung des betreffenden Raums weitgehend verhindern, andererseits durch Verschwenkung eine besonders flexible Variation des eintretenden Sonnenlichts erlauben, um in dem betreffenden Raum gezielt die gewünschten Temperatur-, Klima- und Helligkeitsverhältnisse einstellen zu können.

Zur Lösung dieser Aufgabe wird gemäß der vorliegenden Erfindung ausgehend von der lichtdurchlässigen Lamelle der eingangs genannten Art vorgeschlagen, dass die Lamelle mindestens ein zumindest teilweise lichtundurchlässiges flächiges Beschattungselement mit einer Längserstreckung und einer Breite aufweist, das sich mit seiner Längserstreckung zumindest über einen Teil der Längserstreckung des Abdeckelements erstreckt, das mit einer ersten Längsseite an dem Abdeckelement befestigt ist und das mit einer der ersten Längsseite gegenüberliegenden zweiten Längsseite von dem Abdeckelement absteht, wobei das Beschattungselement in seiner Flächenerstreckung in einem Winkel zu der Flächenerstreckung des Abdeckelements angeordnet ist.

Gemäß der vorliegenden Erfindung wird unterschieden zwischen Sonnenstrahlen einerseits, die ihren Ursprung unmittelbar in der Sonne haben und zu einem Erwärmen eines unterhalb des Lamellendachs befindlichen Raumes führen, wenn sie durch die Abdeckelemente des Lamellendachs in den Raum eintreten, und diffusem Tageslicht andererseits, das zwar nach einem Durchtritt durch die Abdeckelemente zu mehr Helligkeit in dem betreffenden Raum, jedoch praktisch zu keiner Erwärmung des Raums führt. Die Beschattungselemente sollen zumindest einen Teil der Sonnenstrahlung daran hindern, durch das transparente Abdeckelement in den Raum zu gelangen. Demgegenüber kann das diffuse Tageslicht nach wie vor durch die Abdeckelemente in den Raum eintreten. Ferner wird unterschieden zwischen einem Abschatten und einem Beschatten bzw. zwischen Abschattungselementen und Beschattungselementen. Die erfindungsgemäßen Beschattungselemente hindern zumindest einen Teil der Sonnenstrahlung daran, auf das Abdeckelement zu treffen und durch dieses in den darunterliegenden Raum einzutreten. Im Gegensatz dazu würden Abschattungselemente, wie sie bspw. aus der DE 10 2010 031 714 A1 bekannt sind, sowohl die Sonnenstrahlung, als auch das diffuse Tageslicht daran hindern in den darunter liegenden Raum zu gelangen und würden diesen somit verdunkeln.

Die vorliegende Erfindung hat den Vorteil, dass das Beschattungselement zumindest einen Teil der Sonnenstrahlung von dem Abdeckelement und dem darunter liegenden Raum abhält. Gleichzeitig kann jedoch Tageslicht durch das transparente Abdeckelement in den Raum gelangen, so dass dieser ausreichend ausgeleuchtet wird. Dies ist insbesondere für angrenzende Räume von Bedeutung, bspw. für ein Wohn- oder Esszimmer, das neben einer mit Lamellendach abgedeckten Terrasse liegt. Durch Verstellen des Neigungswinkels der Lamellen des Lamellendachs können einerseits die Lamellen so ausgerichtet werden, dass die Beschattungselemente die Sonnenstrahlung optimal abhalten und dass andererseits Wärme aus dem Inneren des Raums nach Außen entweichen kann.

Erfindungsgemäß wird eine Lamelle eines Lamellendachs vorgeschlagen, die zum einen das flächige Abdeckelement aus einem lichtdurchlässigen Material, beispielsweise Glas oder Kunststoff, und zum anderen das mindestens eine Beschattungselement, das von dem Abdeckelement in einem bestimmten Winkel absteht, aufweist. Das Abdeckelement ist vorzugsweise als eine Hohlkammerplatte (Stegmehrfachplatte) ausgebildet. Das Beschattungselement kann aus einem beliebigen, zumindest teilweise lichtundurchlässigen Material bestehen. Vorzugsweise besteht das Beschattungselement aus einem gänzlich lichtundurchlässigen Material. Besonders bevorzugt ist Kunststoff oder Metall, insbesondere Aluminium.

Es wäre auch denkbar, dass die Lamelle, d.h. Abdeck- und Beschattungselement, aus einem einzigen Teil besteht, wobei in diesem Fall bspw. das Abdeckelement aus lichtdurchlässigem und das Beschattungselement aus eingefärbtem oder mattiertem, zumindest teilweise lichtundurchlässigem Kunststoff besteht.

Es ist ferner denkbar, dass die erfindungsgemäße Lamelle des erfindungsgemäßen Lamellendachs mehrere Beschattungselemente aufweist, die zueinander beabstandet an dem Abdeckelement angeordnet sind. In diesem Fall können die einzelnen Beschattungselemente einer Lamelle auch unterschiedlich ausgestaltet sein, insbesondere können sie unterschiedliche Breiten (bzw. Höhen) aufweisen. Das hat den Vorteil, dass die Gesamt-Höhe einer Lamelle bei einem vorgegebenen Beschattungsgrad (beschattete Fläche des Abdeckelements bezogen auf die Gesamtfläche des Abdeckelements) niedriger gehalten werden kann. Auch verschiedene Lamellen eines Lamellendachs oder-fensters können unterschiedlich ausgestaltete Beschattungselemente aufweisen.

Anders als im Stand der Technik, wo sich das Abschattungselement (vgl. DE 10 2010 031 714 A1) auf der Innenseite des Abdeckelements und im Wesentlichen parallel zur Flächenerstreckung des Abdeckelements erstreckt, erstreckt sich das mindestens eine Beschattungselement bei der erfindungsgemäßen Lamelle des erfindungsgemäßen Lamellendachs in einem Winkel zur Flächenerstreckung des Abdeckelements, vorzugsweise auf der Außenseite des Abdeckelements. Das Beschattungselement ist mit einer ersten Längsseite an dem Abdeckelement befestigt und ragt mit der gegenüberliegenden Längsseite in einem Winkel von diesem ab. Es ist denkbar, dass der Winkel ein fest vorgegebener Winkel ist. Es wäre aber auch denkbar, dass der Winkel variabel ist und bspw. an den aktuellen Sonnenstand oder die aktuellen Lichtverhältnisse angepasst werden kann.

Der Winkel des Beschattungselements relativ zur Flächenerstreckung des Abdeckelements und die Form sowie die Abmessungen und Position des Beschattungselements bezüglich des Abdeckelements richten sich nach individuellen Anforderungen. Die individuellen Anforderungen können die Wünsche der Nutzer betreffen, in Bezug auf Licht und Temperatur. Die individuellen Anforderungen können aber auch die geografische Lage des Einsatzorts des Lamellendachs betreffen und den davon abhängigen höchsten Sonnenstandswinkel. Je höher die Sonne steht, desto größer sollte die Breite der Beschattungselemente gewählt werden, um noch eine Beschattung des Abdeckelementes in dem gewünschten Maße zu erzielen.

Die Länge der Beschattungselemente entspricht vorzugsweise im Wesentlichen der gesamten Länge der entsprechenden Abdeckelemente, um über die gesamte Längserstreckung der Lamellen eine zumindest teilweise Beschattung des Abdeckelementes zu erzielen. Außerdem kann auf diese Weise die Stabilität der Abdeckelemente und deren Widerstandsfähigkeit gegen quer zur Flächenerstreckung wirkende Kräfte (z.B. Schneelast) über die gesamte Länge der Lamelle verbessert werden.

Das Abdeckelement und das mindestens eine Beschattungselement einer Lamelle können als separate Teile ausgebildet und aneinander befestigt sein. Dies erlaubt es, das Beschattungselement aus einem anderen Material als das Abdeckelement zu fertigen. Denkbar ist bspw. ein Beschattungselement aus einem Metall, bspw. Aluminium, und ein Abdeckelement aus einem transparenten Kunststoff. Die Befestigung des mindestens einen Beschattungselements an dem Abdeckelement kann auf beliebige Weise erfolgen, insbesondere durch eine Rastverbindung, Stecken, Clipsen, Kleben, Schweißen, etc.

Es ist aber auch denkbar, dass das mindestens eine Beschattungselement und das Abdeckelement einer Lamelle ein integrales Teil bilden, das in einem einzigen Fertigungsschritt, bspw. mittels Extrusion, gefertigt ist. Dabei kann für das mindestens eine Beschattungselement ein anderes Material als für das Abdeckelement verwendet werden, bspw. ein anderes Kunststoffmaterial. Es ist aber auch denkbar, dass für beide Elemente das gleiche Material, aber mit unterschiedlichen Eigenschaften, bspw. für das mindestens eine Beschattungselement ein eingefärbtes oder mit Sonnenlicht reflektierenden Partikeln, insbesondere Metallpartikeln, versetztes Kunststoffmaterial verwendet wird.

Das Beschattungselement und das Abdeckelement bilden vorzugsweise eine strukturelle Einheit, so dass Kräfte aus dem Abdeckelement in das Beschattungselement geleitet und über dieses abgeleitet und verteilt werden können. Dabei können das mindestens eine Beschattungselement und das Abdeckelement einer Lamelle sowohl separate Teile als auch ein integrales Teil sein. Insofern dient das Beschattungselement vorteilhafterweise nicht nur zum Abschatten zumindest eines Teils der Sonnenstrahlung und somit zum Beschatten zumindest eines Teils des Abdeckelements, sondern auch zur Versteifung und Stabilisierung der Lamelle in einer Richtung quer zur Flächenerstreckung des Abdeckelements. Das bedeutet, dass das Beschattungselement Kräfte aus dem Abdeckelement aufnehmen kann, die im Wesentlichen senkrecht zur Flächenerstreckung des Abdeckelements auf dieses wirken. Derartige Kräfte können beispielsweise durch starke Niederschläge, insbesondere starken Regen, Hagel oder Schneefall, aber auch durch auf der Oberseite des Lamellendachs abgelagertes feuchtes Laub oder ähnliches hervorgerufen werden. Dadurch kann ein eventueller Stabilisierungsrahmen der Lamelle kleiner, leichter und/oder aus einem dünneren Material ausgebildet sein oder es kann auf einen Stabilisierungsrahmen ganz verzichtet werden.

Die erfindungsgemäße Lamelle des erfindungsgemäßen Lamellendachs kann im Querschnitt z.B. die Form eines "T" aufweisen. Dabei kann der Querbalken des "T" durch das Abdeckelement und der senkrecht stehende Balken des "T" durch das Beschattungselement gebildet werden. Falls das Beschattungselement entlang seiner zweiten Längsseite, mit der es von dem Abdeckelement abragt, ein im Wesentlichen senkrecht zu der Flächenerstreckung des Beschattungselements verlaufendes Verstärkungselement aufweist, würde die Lamelle im Querschnitt die Form eines angedeuteten "I" aufweisen.

Bei dem angesprochenen Beispiel eines "T"- beziehungsweise "I"-förmigen Querschnitts der Lamelle wäre das Beschattungselement in einem Winkel von etwa 90° bezüglich der Flächenerstreckung des Abdeckelements an diesem befestigt. Dies ist jedoch keine notwendige Voraussetzung für die vorliegende Erfindung. Ganz im Gegenteil, das Beschattungselement kann in einem nahezu beliebigen Winkel relativ zur Flächenerstreckung des Abdeckelements an diesem angeordnet sein, insbesondere in einem Winkel von 45° bis 90°. Zwar ist von einem Stabilitätsgesichtspunkt aus ein 90°-Winkel zwischen Beschattungselement und Abdeckelement am besten geeignet. Für die dem Beschattungselement primär zugedachte Aufgabe eines Abschattens zumindest eines Teils des einfallenden Sonnenlichts und eines Beschattens der Abdeckelemente kann es demgegenüber jedoch sinnvoll sein, wenn das Beschattungselement nicht in einem 90°-Winkel, sondern in einem beliebig anderen Winkel, der den Beschattungseffekt erhöht, an dem Abdeckelement befestigt ist.

Es ist denkbar, dass das Beschattungselement derart an dem Abdeckelement befestigt ist, dass die erste Längsseite des Beschattungselements im Wesentlichen mittig zwischen zwei parallelen Längsseiten des Abdeckelements verläuft. Die Drehachse der Lamelle, um die die Lamelle zwischen verschiedenen Stellungen (z.B. einer geschlossenen und einer geöffneten Stellung) verschwenkbar ist, verläuft vorzugsweise parallel zu den Längsseiten des Abdeckelements. Es ist aber auch denkbar, dass die Drehachse schräg zu den Längsseiten des Abdeckelements verläuft. Ferner ist es auch möglich, dass das Beschattungselement derart an dem Abdeckelement befestigt ist, dass die erste Längsseite des Beschattungselements entlang einer der Längsseiten des Abdeckelements verläuft oder in jeder beliebigen anderen Position.

Bevorzugt ist es außerdem, wenn das Beschattungselement bei vollständig geschlossener Lamelle auf der Außenseite des Abdeckelements befestigt ist und von diesem nach oben abragt. Die Anordnung des Beschattungselements auf der Außenseite der Lamelle hat den Vorteil, dass Sonnenstrahlen abgeschattet werden können noch bevor sie das Abdeckelement erreichen und durch dieses in den betreffenden Raum gelangen können. Ein übermäßiges Erwärmen des betreffenden Raums oder gar ein Hitzestau in dem Raum kann dadurch wirksam vermieden werden, da die IR-Anteile des Sonnenlichts gar nicht erst durch das Abdeckelement in den Raum gelangen können, sondern von dem Beschattungselement absorbiert oder reflektiert bzw. gestreut werden. Ferner wird durch die Beschattung des Abdeckelements der Blendeffekt vermieden.

Es ist aber auch denkbar, dass das Beschattungselement auf der Innenseite des Abdeckelementes befestigt ist. Dies ist insbesondere in Kombination mit einer um mehr als 90°, vorzugsweise um bis zu einer zweiten geschlossen Stellung bei etwa 180°, um ihre Drehachse drehbaren Lamelle von Vorteil. Dabei könnten im Sommer durch nach außen gedrehtes Beschattungselement Sonnenstrahlen abgeschattet werden und bei kälterer Witterung durch nach unten (innen) gedrehtes Beschattungselement Sonnenstrahlen durch das Abdeckelement hindurchgelangen und den darunter gelegenen Raum aufwärmen. Gleichzeitig wird der Blendeffekt verhindert und die Tragfähigkeit der Lamelle gewährleistet.

Das Abdeckelement kann - wie gesagt - als eine sog. Hohlkammer- oder Stegplatte ausgebildet sein, insbesondere als eine Stegmehrfachplatte. Eine solche Platte weist mindestens zwei zueinander beabstandete und parallel zueinander angeordnete Abdeckplatten auf, zwischen denen über die gesamte Länge der Lamelle vorzugsweise senkrecht zu den Abdeckplatten verlaufende Stege angeordnet sind. Dadurch ergibt sich ein leichtes, aber sehr stabiles und widerstandsfähiges Abdeckelement. Es ist denkbar, dass dabei zumindest einer der Stege ein Beschattungselement bildet, indem das Material des Stegs eingefärbt oder mit lichtundurchlässigen, -abweisenden oder -absorbierenden Partikeln versetzt ist. Auf diese Weise kann der mindestens eine Steg die einfallende Sonnenstrahlung zumindest teilweise vor einem Auftreffen auf die untere Abdeckplatte des Abdeckelements abhalten. In der Summe würden viele als Beschattungselemente ausgebildete Stege eines Abdeckelements die untere Abdeckplatte beschatten können.

Diese Ausführung der Lamelle hat den Vorteil, dass das mindestens eine Beschattungselement in das Abdeckelement integriert ist und somit besonders wenig Bauraum und wenig Platz zum Verschwenken der Lamelle um ihre Drehachse benötigt.

Ferner ist es denkbar, die Beschattungselemente teillichtdurchlässig auszugestalten oder die Größe der Beschattungselemente so zu wählen, dass ein gewünschter Anteil des Sonnenlichts durch die Beschattungselemente hindurch oder an diesen vorbei auf die Abdeckelemente und über diese in den betreffenden Raum gelangen kann. Dies kann bspw. in Ländern und/oder zu Jahreszeiten interessant sein, wo die Sonnenstrahlung nicht sehr stark ist. Außerdem kann die Oberfläche der Beschattungselemente gezielt so ausgebildet werden, dass zumindest ein Teil der darauf treffenden Sonnenstrahlen als Streulicht durch die Abdeckelemente in den betreffenden Raum gelangt, wobei das Streulicht weniger Wärmeenergie enthält, da diese zum großen Teil vom Beschattungselement absorbiert wird.

Durch eine geeignete Ausgestaltung der den Sonnenstrahlen ausgesetzten Oberfläche des Beschattungselements können dessen optische Reflexions- bzw. Absorptionseigenschaften in gewünschter Weise definiert und an die individuellen Wünsche und Erfordernisse angepasst werden. Die Oberflächen des Beschattungselements können eben ausgebildet sein. Sie können parallel oder schräg zueinander verlaufen. Ebenso kann das Beschattungselement zumindest eine gekrümmte Oberfläche, insbesondere eine konvex gekrümmte Oberfläche, aufweisen. Ferner ist es denkbar, dass die Oberfläche Licht streuende Elemente, beispielsweise eine Mikrostruktur mit Streuelementen im Mikro- oder Nanometerbereich, Prismen, Zylinderlinsen o.ä. aufweist. Ebenso könnte mindestens eine Oberfläche des Beschattungselements facettiert ausgebildet sein, wobei einzelne Facetten der Oberfläche in einem bestimmten Neigungswinkel der Lamelle in Richtung Sonne ausgerichtet sein können.

Die Breite (bzw. Höhe) des Beschattungselements wird vorzugsweise so gewählt, dass in der betreffenden Region, wo die Sonnenschutzlamelle eingesetzt wird, im Sommer bei dem steilsten Sonneneinfallswinkel nahezu das gesamte Abdeckelement beschattet ist. Je nach Anzahl der Beschattungselemente, sowie deren Position und Winkel auf dem Abdeckelement und je nach dem Verhältnis zwischen den jeweiligen Breiten von Beschattungs- und Abdeckelement, wäre es möglich, die Lamelle zumindest in eine Richtung um mehr als 90° um die Drehachse zu drehen. Bei hinreichend geringer Breite kann das Beschattungselement an der benachbarten Lamelle vorbei von außen nach innen in den betreffenden Raum eintauchen. Bei hinreichend großer Breite des Beschattungselements einer Lamelle hingegen, stößt dieses nach einer Drehung um bis zu 90° mit einer seiner Oberflächen im Bereich der von dem Abdeckelement abstehenden zweiten Längsseite gegen ein benachbartes Abdeckelement, insbesondere gegen eine der Längsseiten des Abdeckelements. Dadurch kann das Lamellendach in eine zweite ebenfalls geschlossene Position gebracht werden in der das Lamellendach z.B. nach Art eines Scheddaches ausgebildet ist. Bei entsprechender Position des Beschattungselements auf dem Abdeckelement (entlang einer seiner Längsseiten) kann bei einer Drehung um 90° eine horizontale Lage der Beschattungselemente erreicht werden, die zu einer zweiten geschlossenen Position führt, bei der die Beschattungselemente mit ihren zweiten Längsseiten an jeweils benachbarten Lamellen aufliegen. In der zweiten geschlossenen Position ist das Lamellendach gänzlich lichtundurchlässig.

Die Drehachse kann sich an einer beliebigen Stelle der Lamelle befinden, vorzugsweise am Beschattungselement selbst im Bereich des Abdeckelements, da die Lamelle dort in der Regel die größte Steifigkeit aufweist.

Die Lamelle wird mittels eines Betätigungsmechanismus des Lamellendachs manuell oder motorisch betätigt. Entsprechende Betätigungsmechanismen und wetterabhängige Steuerungen sind aus dem Stand der Technik hinreichend bekannt.

Weitere Merkmale und Vorteile der vorliegenden Erfindung werden nachfolgend anhand der Figuren näher erläutert, die bevorzugte Ausführungsbeispiele der Erfindung zeigen. Dabei ist die Erfindung nicht auf die dargestellten Ausführungsbeispiele beschränkt. Die Figuren zeigen:
Figur 1 eine erfindungsgemäße Lamelle des erfindungsgemäßen Lamellendachs gemäß einer ersten bevorzugten Ausführungsform in einem Querschnitt;
Figur 2 eine erfindungsgemäße Lamelle des erfindungsgemäßen Lamellendachs gemäß einer zweiten bevorzugten Ausführungsform in einem Querschnitt;
Figur 3 eine erfindungsgemäße Lamelle des erfindungsgemäßen Lamellendachs gemäß einer dritten bevorzugten Ausführungsform in einem Querschnitt;
Figur 4 eine erfindungsgemäße Lamelle des erfindungsgemäßen Lamellendachs gemäß einer vierten bevorzugten Ausführungsform in einem Querschnitt;
Figur 5 eine erfindungsgemäße Lamelle des erfindungsgemäßen Lamellendachs gemäß einer fünften bevorzugten Ausführungsform in einem Querschnitt;
Figur 6 eine erfindungsgemäße Lamelle des erfindungsgemäßen Lamellendachs gemäß einer sechsten bevorzugten Ausführungsform in einem Querschnitt;
Figur 7 einen Ausschnitt eines erfindungsgemäßen Lamellendachs mit mehreren Lamellen in einem Querschnitt gemäß einer ersten bevorzugten Ausführungsform mit den Lamellen in einer ersten Stellung;
Figur 8 den Ausschnitt des erfindungsgemäßen Lamellendachs aus Figur 7 in einem Querschnitt mit den Lamellen in einer zweiten Stellung;
Figur 9 einen Ausschnitt eines erfindungsgemäßen Lamellendachs mit mehreren Lamellen in einem Querschnitt gemäß einer zweiten bevorzugten Ausführungsform mit den Lamellen in einer ersten Stellung;
Figur 10 den Ausschnitt des erfindungsgemäßen Lamellendachs aus Figur 9 in einem Querschnitt mit den Lamellen in einer zweiten Stellung;
Figur 11 den Ausschnitt des erfindungsgemäßen Lamellendachs aus Figur 9 in einem Querschnitt mit den Lamellen in einer dritten Stellung;
Figur 12 einen Ausschnitt eines erfindungsgemäßen Lamellendachs mit mehreren Lamellen in einem Querschnitt gemäß einer weiteren bevorzugten Ausführungsform mit den Lamellen in einer ersten Stellung;
Figur 13 den Ausschnitt des erfindungsgemäßen Lamellendachs aus Figur 12 in einem Querschnitt mit den Lamellen in einer zweiten Stellung;
Figur 14 eine erfindungsgemäße Lamelle des erfindungsgemäßen Lamellendachs gemäß einer weiteren bevorzugten Ausführungsform im Querschnitt;
Figur 15 eine Lamelle gemäß einer weiteren Ausführungsform im Querschnitt;
Figur 16 ein erfindungsgemäßes Lamellendach gemäß einer ersten bevorzugten Ausführungsform in einer Draufsicht; und
Figur 17 ein erfindungsgemäßes Lamellendach gemäß einer zweiten bevorzugten Ausführungsform in einer Draufsicht.

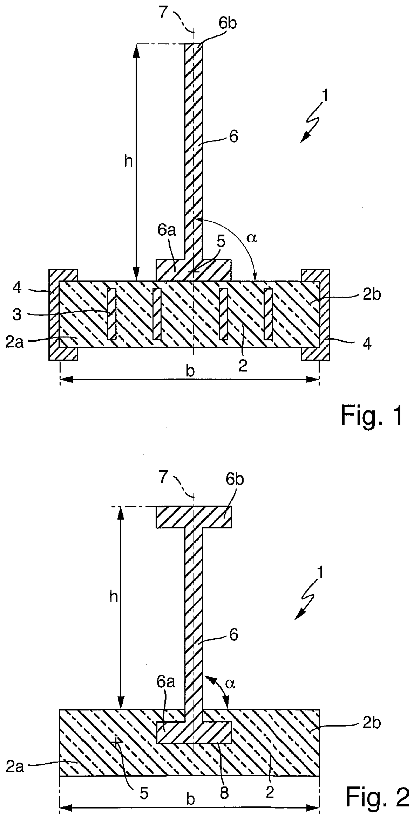

Die vorliegende Erfindung betrifft ein Lamellendach. In Figur 1 ist eine erste bevorzugte Ausführungsform einer erfindungsgemäßen Lamelle des erfindungsgemäßen Lamellendachs in einem Querschnitt quer zu einer Längserstreckung der Lamelle gezeigt. Die Lamelle ist in ihrer Gesamtheit mit dem Bezugszeichen 1 bezeichnet. Die Lamelle 1 umfasst ein Abdeckelement 2 mit einer im Wesentlichen ebenen Flächenerstreckung. Selbstverständlich kann das Abdeckelement 2 auch eine beliebig andere Flächenerstreckung aufweisen, bspw. eine im Querschnitt einem liegenden "S" entsprechende Form, wie dies an sich bspw. aus der WO 2011/121370 A2 bekannt ist. Das Abdeckelement 2 ist aus einem transparenten Material, insbesondere Glas oder Kunststoff, gefertigt. Vorzugsweise besteht das Abdeckelement 2 aus Polycarbonat (PC) oder Polymethylmethacrylat (PMMA). Die Breite des Abdeckelements 2 ist mit b bezeichnet.

Das Abdeckelement 2 hat eine Längserstreckung, die wesentlich größer als die Breite b ist. Das Abdeckelement 2 kann zur Erhöhung seiner Stabilität entlang der Längserstreckung mit Stabilisierungselementen durchzogen sein, die in Figur 1 schematisch eingezeichnet und mit dem Bezugszeichen 3 bezeichnet sind. Die Stabilisierungselemente 3 können Drähte oder Stangen oder Profile aus einem stabilen Material, bspw. Metall oder Kunststoff, sein. Alternativ oder zusätzlich kann das Abdeckelement 2 auch von einem Stabilisierungsrahmen 4 umgeben sein, wobei in Figur 1 lediglich entlang der Längsseiten 2a, 2b des Abdeckelements 2 verlaufende Längsträger des Rahmens 4 eingezeichnet sind.

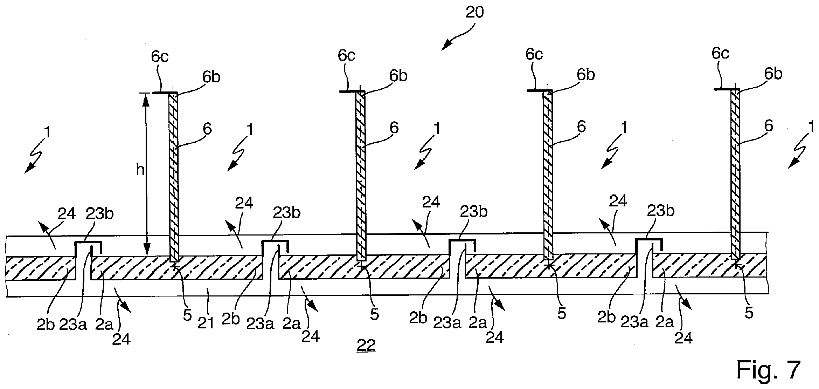

Die Lamelle 1 ist um eine entlang der Längserstreckung des Abdeckelements 2 verlaufende Drehachse 5 verschwenkbar, um sie zwischen verschiedenen Stellungen, bspw. einer geschlossenen Stellung und einer geöffneten Stellung, zu verstellen. Die Drehachse 5 verläuft parallel zu den Längsseiten 2a, 2b des Abdeckelements 2. Die verschiedenen Stellungen, welche die Lamelle 1 einnehmen kann, werden weiter unten anhand der Figuren 7 bis 13 ausführlich erläutert.

Die Lamelle 1 weist außerdem ein flächiges Beschattungselement 6 auf, das aus einem zumindest teilweise lichtundurchlässigen Material, insbesondere aus Metall oder Kunststoff, ganz besonders bevorzugt aus Aluminium gefertigt ist. Das Beschattungselement 6 ist an dem Abdeckelement 2 befestigt und erstreckt sich vorzugsweise mit seiner Längserstreckung über die gesamte Länge des Abdeckelements 2. Zur Gewichtsreduktion kann das Beschattungselement 6 dünnwandig ausgebildet oder, wenn es aus einem dickwandigeren Material besteht, mit inneren Hohlräumen versehen sein. Eine Breite des Beschattungselements 6 ist mit h bezeichnet.

Das Beschattungselement 6 sorgt für eine deutlich verbesserte Stabilität der Lamelle 1 entlang ihrer Längserstreckung. Durch das Beschattungselement 6 können insbesondere von oben auf das Abdeckelement 2 wirkende Kräfte aufgenommen und verteilt werden. Auf diese Weise wird ein Durchbiegen oder Knicken der Lamelle 1 um eine quer zur Längserstreckung der Lamelle 1 verlaufende Achse wirksam verhindert. Das Beschattungselement 6 weist in dem dargestellten Beispiel im Querschnitt die Form eines umgedrehten "T" oder eine "T"-ähnliche Form auf.

Das Beschattungselement 6 ist mit einer ersten Längsseite 6a an dem Abdeckelement 2 befestigt. In dem dargestellten Beispiel ist das Beschattungselement 6 über die gesamte erste Längsseite 6a an dem Abdeckelement 2 festgeklebt. Zur Vergrößerung der Klebefläche zwischen dem Beschattungselement 6 und dem Abdeckelement 2 ist die erste Längsseite 6a gegenüber der Wandstärke des restlichen Beschattungselements 6 verbreitert. Alternativ kann das Beschattungselement 6 bspw. auch mittels Laserschweißens an dem Abdeckelement 2 befestigt werden. Es wäre auch denkbar, das Abdeckelement 2 und das Beschattungselement 6 in einem einzigen Produktionsschritt als ein gemeinsames Bauteil in Form eines integralen Lamellen-Elements zu fertigen.

Das Beschattungselement 6 steht mit einer der ersten Längsseite 6a gegenüber liegenden zweiten Längsseite 6b von dem Abdeckelement 2 ab. Schräg einfallende Sonnenstrahlen werden auf diese Weise zumindest teilweise abgeschattet, so dass sie das Abdeckelement 2 nicht erreichen und durch dieses nicht in den darunter liegenden Raum eintreten können. Dadurch kann auf besonders wirkungsvolle Weise ein übermäßiges Aufheizen des Raums verhindert werden. Das Beschattungselement 6 hat also eine Doppelfunktion, nämlich ein Beschatten zumindest eines Teils des Abdeckelements 2 und eine Erhöhung der Stabilität der Lamelle 1.

Die Beschattung des Abdeckelements bewirkt weiterhin eine Vermeidung des unerwünschten Blendeffekts. Die Ausleuchtung des betreffenden Raumes wäre dennoch gewährleistet, da das diffuse Tageslicht ungehindert durch das Abdeckelement gelangen kann. Die Ausleuchtung des Raumes erhöht sich - je nach Beschaffenheit der Oberfläche des Beschattungselements - zusätzlich dadurch, dass Sonnenstrahlen, die auf die der Sonne zugewandten Oberfläche des Beschattungselements treffen, von diesem reflektiert werden und dann zum Teil als Streulicht durch das Abdeckelement in den Raum gelangen. Ein Großteil der Wärmeenergie wird von dem Beschattungselement absorbiert, sodass das Streulicht den Raum nicht aufheizt.

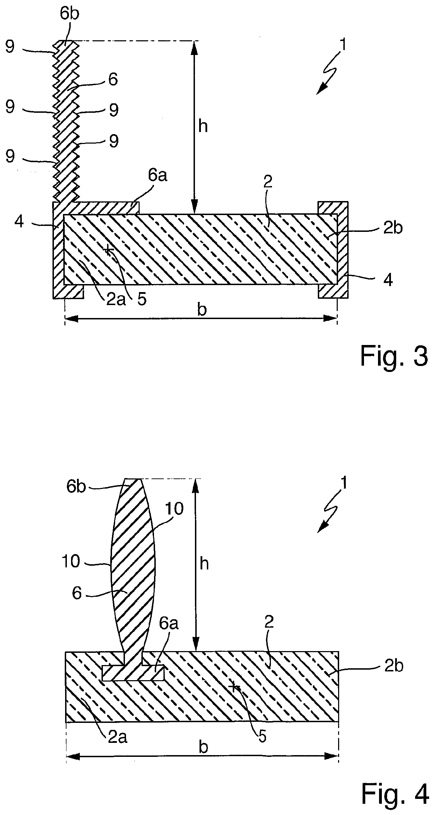

Durch die Befestigung des Beschattungselements 6 an dem Abdeckelement 2 können Kräfte, die auf das Abdeckelement 2 wirken, zumindest teilweise auf das Beschattungselement 6 übertragen und durch dieses über die Länge der Lamelle 1 verteilt werden. Wenn man davon ausgeht, dass die Oberfläche des Abdeckelements 2, auf der das Beschattungselement 6 befestigt ist, die Außenseite der Lamelle 1 bildet, wenn diese in ein Lamellendach eingesetzt ist, kann durch Schmutz (z.B. Sand, Erde, Moos, Blätter, etc.) und/oder Niederschlag (z.B. Regen, Hagel, Schnee, etc.) und/oder Wind von der Außenseite her eine erhebliche Last auf der Lamelle 1 wirken, die nach unten gerichtete Kräfte mit Kraftkomponenten senkrecht zu einer Flächenerstreckung des Abdeckelements 2 bewirkt. Das Beschattungselement 6 kann ein Knicken der Lamelle 1 entlang ihrer Längserstreckung um eine in etwa quer zu der Längserstreckung der Lamelle 1 verlaufende Achse unter dieser Last verhindern. Somit kann auf die genannten Stabilisierungselemente 3 und/oder den Stabilisierungsrahmen 4 an bzw. in dem Abdeckelement 2 (vgl. Figuren 1 und 3) verzichtet werden, wie in den Ausführungsbeispielen der Figuren 2 und 4 bis 15.

Selbstverständlich wäre es auch denkbar, dass die Oberfläche des Abdeckelements 2, auf der das Beschattungselement 6 befestigt ist, nach innen, zum Raum hin, gerichtet ist. In diesem Fall wäre also das Beschattungselement 6 an der Innenseite der in ihrer geschlossenen Stellung befindlichen Lamelle 1 angeordnet. Auch ein an der Innenseite des Abdeckelements 2 angeordnetes Beschattungselement 6 würde gleichermaßen die erwähnte verbesserte Stabilität der Lamelle 1 bewirken können. Ein zusätzlicher Effekt des innen angeordneten Beschattungselements 6 wäre ein "Einfangen" von Wärme der durch das Abdeckelement 2 in den Raum einfallenden Sonnenstrahlen, was insbesondere bei kühler Witterung eine kostengünstige und klimaneutrale Erwärmung des betreffenden Raums mittels Solarthermie bewirken kann. Die nach unten gerichteten Beschattungselemente verhindern außerdem den Blendeffekt von innen.

Das Beschattungselement 6 ist in seiner Flächenerstreckung in einem vorgegebenen Winkel α zu der Flächenerstreckung des Abdeckelements 2 angeordnet. In dem dargestellten Beispiel beträgt der Winkel α = 90°. Dabei verläuft eine der Flächenerstreckung des Beschattungselements 6 entsprechende Ebene 7 im Wesentlichen parallel zu der Längserstreckung des Beschattungselements 6 und parallel zu einer Flächennormalen (nicht eingezeichnet) der Oberfläche des Abdeckelements 2 im Bereich der Klebestelle zwischen dem Beschattungselement 6 und dem Abdeckelement 2. Selbstverständlich kann der Winkel α nahezu einen beliebigen Wert haben, insbesondere kann er Werte 10° < α ≤ 170°, besonders bevorzugt 45° ≤ α ≤ 135°, annehmen.

In Figur 2 ist eine zweite bevorzugte Ausführungsform einer Lamelle 1 in einem Querschnitt quer zu einer Längserstreckung der Lamelle 1 gezeigt. Die Lamelle 1 umfasst ebenfalls ein Abdeckelement 2, das aus einem transparenten Material gefertigt ist, und ein daran befestigtes und davon abstehendes Beschattungselement 6 aus einem zumindest teilweise lichtundurchlässigen Material. Die Befestigung des Beschattungselements 6 an dem Abdeckelement 2 ist dabei dadurch realisiert, dass in einer Oberfläche des Abdeckelements 2 eine längliche Nut 8 eingebracht ist, die von ihrer Form und Erstreckung her dazu ausgebildet ist, die erste Längsseite 6a des Beschattungselements 6 aufzunehmen. Insbesondere kann das Beschattungselement 6 bzw. seine erste Längsseite 6a entlang der Längserstreckung in die Nut 8 eingeführt werden. Dies geschieht vor dem Einbau der Lamelle 1 in eine Lamellendachkonstruktion. Die erste Längsseite 6a des Beschattungselements 6 kann mittels Reibschluss oder auf andere Weise (mittels Formschluss oder ausgehärtetem Klebstoff oder Silikon) in der Nut 8 gehalten sein.

Die erste Längsseite 6a kann mittels geeigneter Dichtmittel (nicht gezeigt), bspw. in Form von transparenten Silikonlippen im Inneren oder am oberen Rand der Nut 8, in der Nut 8 gehalten werden, um ein Eindringen von Feuchtigkeit in die Nut 8 zu verhindern. Zur Verbesserung der Stabilität der Lamelle 1 gegen im Wesentlichen senkrecht zur Flächenerstreckung des Abdeckelements 2 (in dem vorliegenden Ausführungsbeispiel auch parallel zu der Ebene 7 des Beschattungselements 6) wirkende Kräfte oder Kraftkomponenten ist die zweite Längsseite 6b des Beschattungselements 6 verbreitert ausgebildet, so dass das Beschattungselement 6 im Querschnitt in etwa die Form eines "I" oder eine "I"-ähnliche Form aufweist.

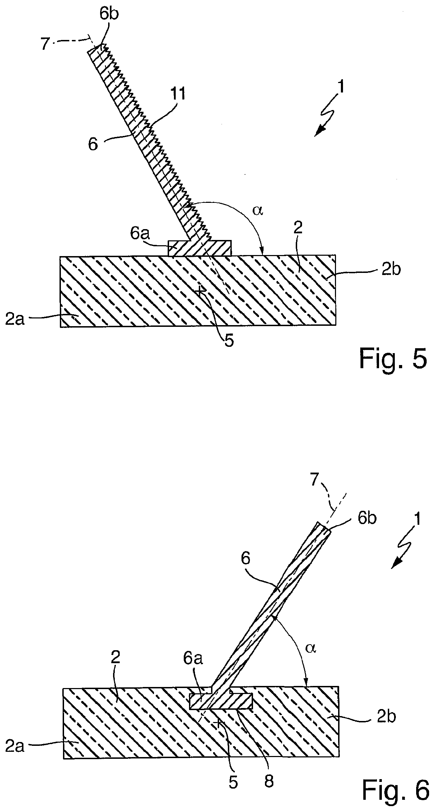

Das Beschattungselement 6 der Lamellen 1 aus den Figuren 1 und 2 hat eine ebene Flächenerstreckung. Insbesondere sind die gegenüberliegenden seitlichen Oberflächen des Beschattungselements 6 parallel zueinander ausgebildet. Das kann dazu führen, dass auf die der Sonne zugewandte Oberfläche des Beschattungselements 6 einer Lamelle 1 treffende und von dieser reflektierte Sonnenstrahlen durch das transparente Abdeckelement 2 dieser Lamelle 1 oder einer benachbarten Lamelle 1 in den darunter befindlichen Raum fällt und einen Blendeffekt erzeugt. Um diesen zu vermeiden, kann deshalb mindestens die der Sonne zugewandte Oberfläche des Beschattungselements 6 mit einer Streustruktur versehen sein, welche auftreffende Sonnenstrahlen möglichst breit streut. Die Streustruktur kann z.B. durch eine Mikrostruktur 11 (vgl. Figur 5) realisiert sein, die eine Vielzahl von Streuelementen im Mikro- oder Nanobereich aufweist. Selbstverständlich kann das Beschattungselement 6 auch eine gebogene oder gekrümmte Flächenerstreckung aufweisen.

In Figur 3 ist ein weiteres Ausführungsbeispiel einer Lamelle 1 gezeigt, bei dem beide Oberflächen des Beschattungselements 6 facettiert sind. Selbstverständlich könnte auch nur eine der Oberflächen ganz oder teilweise facettiert sein. Insbesondere weisen die Oberflächen eine Vielzahl von übereinander angeordneten Facetten 9 auf. Durch gezielte Ausrichtung der Facetten 9 können die Sonnenstrahlen in eine gewünschte Richtung reflektiert werden. Dies kann z.B. durch die Ausprägung der Facetten 9 selbst, aber auch durch Drehen der Lamelle 1 geschehen. Auf diese Weise kann der eventuell auftretende Blendeffekt wirksam verringert, bzw. ganz vermieden werden. Auch bei den anderen Ausführungsbeispielen könnten zumindest auf der vorwiegend der Sonne zugewandten Oberfläche des Beschattungselements 6 Facetten 9 ausgebildet sein.

Das Ausführungsbeispiel aus Figur 3 weist eine weitere Besonderheit auf. Dabei ist das Beschattungselement 6 nicht unmittelbar, sondern mittelbar über Rahmenteile des Stabilisierungsrahmens 4, welcher das Abdeckelement 2 zur Verbesserung der Stabilität umgibt, an dem Abdeckelement 2 befestigt. Das entsprechende Rahmenteil 4 und das Beschattungselement 6 können als ein einziges integrales Bauteil ausgebildet sein.

Schließlich unterscheidet sich die Lamelle 1 aus Figur 3 von den Lamellen 1 aus den Figuren 1 und 2 dadurch, dass das Beschattungselement 6 nicht in der Mitte zwischen den beiden Längsseiten 2a, 2b des Abdeckelements 2, sondern entlang einer ersten Längsseite 2a des Abdeckelements 2 verläuft. Auch dies wäre bei den weiteren Ausführungsformen der Lamellen 1 gemäß der Figuren 1, 2 und 4 bis 15 ebenfalls denkbar.

Bei den Ausführungsbeispielen der Figuren 1 bis 3 und 5 bis 15 sind die gegenüberliegenden seitlichen Oberflächen des Beschattungselements 6 parallel zueinander ausgebildet. Selbstverständlich wäre es aber auch denkbar, dass das Beschattungselement 6 mindestens eine gekrümmte Oberfläche aufweist. In diesem Zusammenhang ist in Figur 4 eine Lamelle 1 gezeigt, deren Beschattungselement 6 zwei gegenüberliegende, jeweils konvex gekrümmte seitliche Oberflächen 10 aufweist. Auf diese Weise wird das von der zur Sonne gerichteten Oberfläche 10 reflektierte Licht breiter gestreut. Auch bei den anderen Ausführungsbeispielen der Figuren 1 bis 3 und 5 bis 15 könnte zumindest die vorwiegend der Sonne zugewandte Oberfläche des Beschattungselements 6 als eine gekrümmte Oberfläche 10 ausgebildet sein.

Zudem ist bei der Lamelle 1 aus Figur 4 die Drehachse 5 der Lamelle 1 in einem Abstand zu der ersten Längsseite 6a des Beschattungselements 6 angeordnet.

In den Figuren 5 und 6 sind weitere Ausführungsbeispiele von Lamellen 1 gezeigt. Sie unterscheiden sich insbesondere durch den Wert des Winkels α, in dem die Beschattungselemente 6 bezüglich der Flächenerstreckung der Abdeckelemente 2 angeordnet sind. In dem Beispiel aus Figur 5 ist der Winkel α > 90° und liegt bei etwa 115°. Auf einer der Sonne zugewandten Oberfläche des Beschattungselements 6 ist eine Streustruktur in Form der bereits erwähnten Mikrostruktur 11 aufgebracht. In dem Beispiel aus Figur 6 ist der Winkel α < 90° und liegt bei etwa 65°. Selbstverständlich kann auch bei den Ausführungsbeispielen der Figuren 1 bis 4 und 7 bis 15 der Winkel α ≠ 90° ausgebildet werden.

In Figur 7 ist ein Ausschnitt eines erfindungsgemäßen Lamellendachs 20 mit mehreren Lamellen 1 in einem Querschnitt gemäß einer ersten bevorzugten Ausführungsform gezeigt. Die Lamellen 1 sind um ihre Drehachsen 5 drehbar an einer Trägerstruktur 21, bspw. in Form eines Tragrahmens, des Lamellendachs 20 befestigt, so dass sie zwischen verschiedenen Stellungen verstellt werden können. In Figur 7 sind die Lamellen 1 in einer vollständig geschlossenen Stellung gezeigt. Um in dieser Stellung den darunter befindlichen Raum 22 nach oben hin wind-, schmutz- und feuchtigkeitsdicht abdichten zu können, verfügen die Abdeckelemente 2 der Lamellen 1 an ihren Längsseiten 2a, 2b über ineinander greifende, sich überlappende Dichtungsprofile. Diese umfassen zum einen jeweils ein erstes, im Wesentlichen ebenes und senkrecht nach oben stehendes Dichtungsprofil 23a an der ersten Längsseite 2a des Abdeckelements 2. Außerdem umfassen die Dichtungsprofile jeweils ein zweites, im Wesentlichen "U"-förmiges, nach unten geöffnetes Dichtungsprofil 23b an einer zweiten Längsseite 2b des Abdeckelements 2. In der geschlossenen Stellung der Lamellen 1 greift das erste Dichtungsprofil 23a einer Lamelle 1 von unten zwischen die gegenüberliegenden Schenkel des "U"-förmigen Dichtungsprofils 23b einer benachbarten Lamelle 1 dichtend ein. Dadurch ergibt sich eine Überlappung zwischen den einzelnen Lamellen 1 in der geschlossenen Stellung.

Die Dichtungsprofile 23a, 23b sind vorzugsweise aus einem starren Material, bspw. Kunststoff oder Metall, gefertigt. Besonders bevorzugt sind sie aus Kunststoff und bilden ein einziges Teil mit dem Abdeckelement. Zur Verbesserung der Dichtigkeit zwischen den einander zugeordneten Dichtungsprofilen 23a, 23b benachbarter Lamellen 1 können diese aber auch aus einem nachgiebigen, elastischen Material, bspw. Gummi oder einem weichen Kunststoff bestehen, oder aber es werden geeignete Dichtungsmittel zwischen die Dichtungsprofile 23a, 23b im Bereich ihres gegenseitigen Eingriffs vorgesehen. Selbstverständlich kann die Dichtigkeit zwischen den Lamellen 1 auch ohne die Dichtungsprofile 23a, 23b auf eine beliebig andere Weise erzielt werden. Ebenso wäre es denkbar, die Dichtungsprofile anders als in Figur 7 gezeigt auszugestalten, um die Dichtigkeit des Lamellendachs 20 in der geschlossenen Stellung zu erzielen.

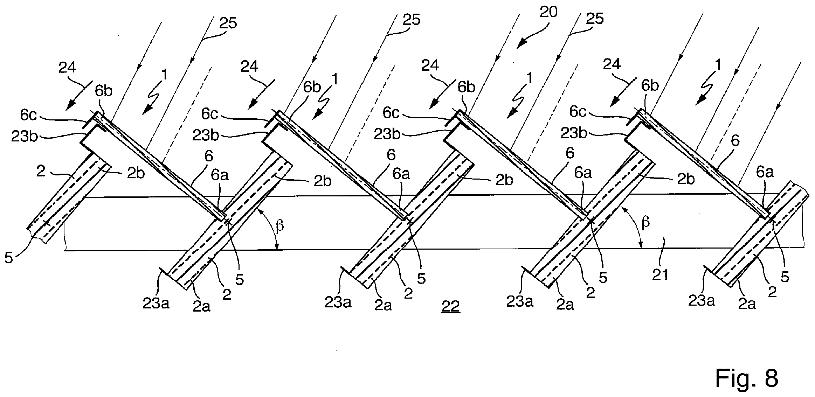

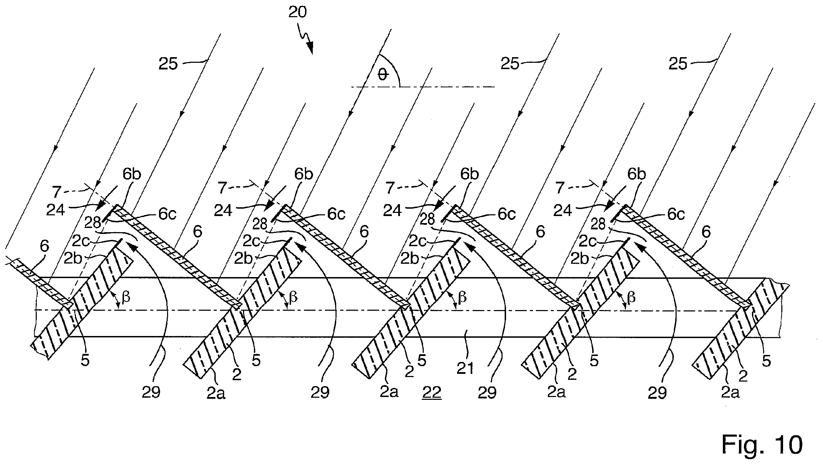

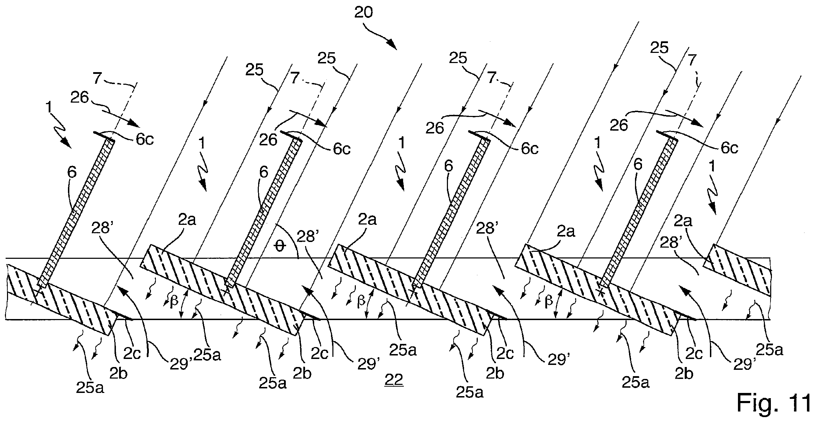

Die dargestellte Ausgestaltung der Dichtungsprofile 23a, 23b erlaubt eine Drehung der Lamellen 1 um ihre Drehachsen 5 im entgegengesetzten Uhrzeigersinn (vgl. Pfeile 24), um die Lamellen 1 aus der dargestellten geschlossenen Stellung in eine andere Stellung zu verschwenken. Die Betätigung der Lamellen 1 kann manuell oder motorisch mittels eines geeigneten Betätigungsmechanismus erfolgen, auf den hier nicht näher eingegangen werden soll, da solche Betätigungsmechanismen aus dem Stand der Technik hinreichend bekannt sind. Die verschwenkte Stellung der Lamellen 1 kann eine geöffnete Stellung sein, oder aber eine in Figur 8 gezeigte zweite geschlossene Stellung. In der geöffneten Stellung der Lamellen 1 trennen sich die Dichtungsprofile 23a, 23b benachbarter Lamellen 1 voneinander und geben einen Zwischenraum zwischen den Lamellen 1 frei, über den Wärme aus dem darunter liegenden Raum 22 nach oben in die Umgebung entweichen kann. Die durch die Zwischenräume gebildeten Entlüftungsöffnungen haben eine Längserstreckung, die parallel zur Längserstreckung der Lamellen 1 verläuft. Zwei Beispiele für verschiedene geöffnete Stellungen der Lamellen 1 sind in den Figuren 10 und 11 gezeigt und werden weiter unten näher erläutert.

Bei einer Bewegung der Lamellen 1 des Lamellendachs 20 aus Figur 7 um die Drehachsen 5 in Richtung der Pfeile 24 gelangen die Lamellen 1 zunächst in eine geöffnete Stellung. Wenn die Lamellen 1 dann weiter in Richtung der Pfeile 24 bewegt werden, treffen nach einem bestimmten Drehwinkel β der Lamellen 1 die zweiten Längsseiten 6b der Beschattungselemente 6 auf die zweiten Längsseiten 2b der jeweils benachbarten Abdeckelemente 2, wie in Figur 8 dargestellt. Insbesondere trifft eine Oberfläche der Beschattungselemente 6 im Bereich der zweiten Längsseiten 6b seitlich auf die zweiten "U"-förmigen Dichtungsprofile 23b. Dadurch sind die Lamellen 1 in einer zweiten geschlossenen Stellung, in der das Lamellendach 20 wieder verschlossen ist. In dem dargestellten Beispiel beträgt der Drehwinkel β etwa 50°. Selbstverständlich kann die zweite geschlossene Stellung der Lamellen 1, je nach Position des Beschattungselements 6 auf dem Abdeckelement 2, auch nach einer Drehung um einen anderen Winkel, bspw. 30° ≤ β ≤ 80°, erreicht werden.

Wenn zwischen den Dichtungsprofilen 23b der Lamellen 1 und den zweiten Längsseiten 6b der Beschattungselemente 6 der benachbarten Lamellen 1 geeignete Dichtungsmittel vorgesehen sind, kann das Lamellendach 20 auch in der zweiten geschlossenen Stellung wind- und feuchtigkeitsdicht schließen. Bevorzugt wird die Dichtigkeit durch ein Überlappungselement 6c erreicht, das entlang der zweiten Längsseite 6b verläuft. In der zweiten geschlossenen Stellung ergibt sich ein Lamellendach 20 nach der Art eines Sheddachs. Durch die Abdeckelemente 2 kann Tageslicht in den Raum 22 gelangen und die Beschattungselemente 6 schatten gleichzeitig mit ihrer der Sonne zugewandten Oberfläche zumindest einen Teil der Sonnenstrahlung ab. Diese Stellung der Lamellen 1 erlaubt somit eine Ausleuchtung des Raums 22 mit Tageslicht und verhindert gleichzeitig ein Aufheizen des Innenraums 22.

Anhand der Figur 8 ist gut zu erkennen, dass die einzelnen Lamellen 1 um mehr als den eingezeichneten Drehwinkel β um die Drehachsen 5 gedreht werden könnten, wenn die Beschattungselemente 6 eine geringere Breite h (vgl. Figur 7) hätten. Dann könnten die Lamellen 1 theoretisch um bis zu 360° um die Drehachsen 5 gedreht werden.

In der Praxis würde bereits eine mögliche Drehung um 180° große Vorteile bringen. Bei einer Drehung der Lamellen 1 um einen Winkel β ≤ 90° um die Drehachsen 5 würden die an der Außenseite der Lamellen 1 des Lamellendachs 20 angeordneten Beschattungselemente 6 die Abdeckelemente 2 zunehmend wirksam beschatten, wobei gleichzeitig der Raum belüftet würde. In der kälteren Jahreszeit könnten die Lamellen dann um einen Winkel β > 90° um die Drehachsen 5 verdreht werden, so dass die Beschattungselemente 6 nach innen in den Raum 22 hineinragen. Bei Erreichen von einem Winkel β von ca. 180° würden die Abdeckelemente wieder miteinander in Berührung kommen und es würde sich eine neue geschlossene Stellung ergeben. Auf diese Weise können die Lamellen 1 durch die Abdeckelemente 2 in den Raum 22 einfallende Sonnenstrahlen "einfangen" und so für eine Erwärmung des Raums 22 sorgen, da in dieser Stellung keine Wärme nach oben entweichen kann. Die vorteilhafte große Stabilität der Lamellen 1 wäre auch bei nach innen ragenden Beschattungselementen 6 gegeben. Außerdem würden in diesem Fall die Beschattungselemente 6 von innen den Blendeffekt reduzieren oder ganz verhindern.

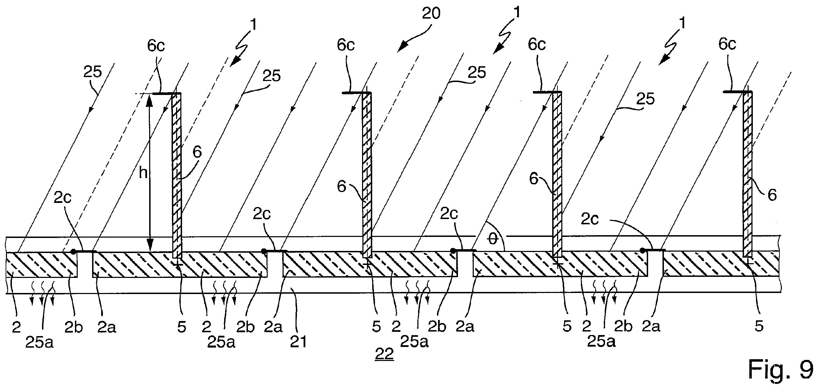

In Figur 9 ist ein Ausschnitt eines erfindungsgemäßen Lamellendachs 20 mit mehreren Lamellen 1 in einem Querschnitt gemäß einer weiteren bevorzugten Ausführungsform gezeigt. Die Lamellen 1 sind um ihre Drehachsen 5 drehbar an einer Trägerstruktur 21 des Lamellendachs 20 befestigt, so dass sie zwischen verschiedenen Stellungen verstellt werden können. In Figur 9 sind die Lamellen in einer vollständig geschlossenen Stellung gezeigt.

Im Unterschied zu den vorangegangenen Ausführungsbeispielen sind hier die Dichtungsmittel, die zwischen den Längsseiten 2a, 2b der Abdeckelemente 2 von benachbarten Lamellen 1 wirken, besonders einfach ausgebildet und umfassen jeweils mindestens eine Dichtungslippe 2c aus nachgiebig elastischem Material, bspw. Gummi oder weichem Kunststoff, mit einer im Wesentlichen ebenen Flächenerstreckung in der Horizontalen, wobei sich jeweils eine Dichtungslippe 2c entlang der ersten Längsseite 2a und/oder der zweiten Längsseite 2b der Abdeckelemente 2 erstreckt. In dem dargestellten Beispiel ist lediglich an den zweiten Längsseiten 2b der Abdeckelemente 2 jeweils eine Dichtungslippe 2c angeordnet. Die Dichtungslippen 2c liegen in der geschlossenen Stellung der Lamellen 1 auf der Oberseite der Abdeckelemente 2 von benachbarten Lamellen 1 im Bereich der ersten Längsseiten 2a auf. Durch diese Ausgestaltung der Dichtungsmittel können die Lamellen 1 nicht nur entgegen dem Uhrzeigersinn 24 sondern auch im Uhrzeigersinn 26 um die Drehachsen 5 verschwenkt werden. Dadurch ergeben sich noch größere Freiheitsgrade was die möglichen Stellungen der Lamellen 1 und die Variation der Temperatur-, Klima- und Lichtbedingungen in dem Raum 22 betrifft.

In Figur 9 sind Sonnenstrahlen schematisch eingezeichnet und mit dem Bezugszeichen 25 bezeichnet. Die Sonnenstrahlen 25 haben einen Sonnenstandswinkel θ von etwa 65°, was in Mitteleuropa in etwa dem maximal möglichen Sonnenstandswinkel zur Sommersonnenwende entspricht. In dem dargestellten Beispiel ist ein Teil der Fläche der transparenten Abdeckelemente 2 durch das entsprechende Beschattungselement 6 der Lamelle 1 oder einer benachbarten Lamelle 1 beschattet. Nur ein Teil der Sonnenstrahlen, mit dem Bezugszeichen 25a bezeichnet, gelangt durch den unbeschatteten Teil der transparenten Abdeckelemente 2. Durch Erhöhen der Breite h der Beschattungselemente 6 oder durch Drehen der Lamelle 1 können auch größere Teile der Abdeckelemente 2 beschattet werden, so dass ein Aufheizen des Innenraums 22 wirksam verringert bzw. verhindert werden kann.

In Figur 10 ist das Lamellendach 20 aus Figur 9 gezeigt, wobei sich die Lamellen 1 in einer Stellung befinden, in der durch die Beschattungselemente 6 die Abdeckelemente 2 gänzlich beschattet sind. Dabei sind die Lamellen 1 um einen Winkel β gegen den Uhrzeigersinn 24 verschwenkt, so dass die Flächenerstreckungsebene 7 der Beschattungselemente 6 im Wesentlichen senkrecht zu den Sonnenstrahlen 25 verläuft. Insbesondere ist der Drehwinkel β der Lamellen 1 im Wesentlichen gleich dem Sonnenstandswinkel θ. In dieser Stellung schatten die Beschattungselemente 6 die gesamte Sonnenstrahlung 25 von den transparenten Abdeckelementen 2 ab, so dass keine Sonnenstrahlen 25 direkt auf die Abdeckelemente 2 treffen. Zwischen den ersten Längsseiten 2b der Abdeckelemente 2 und den zweiten Längsseiten 6b der Beschattungselemente 6 von benachbarten Lamellen 1 sind aufgrund der Schrägstellung der Lamellen 1 schlitzartige Entlüftungsöffnungen 28 gebildet, über die warme Luft 29 aus dem Innenraum 22 nach oben in die Umgebung entweichen kann.

Wenn man ausgehend von der Stellung der Lamellen 1 aus Figur 10 den Neigungswinkel β der Lamellen 1 noch etwas vergrößert bis die zweiten Längsseiten 6b der Beschattungselemente 6 auf den zweiten Längsseiten 2b der Abdeckelemente 2 von benachbarten Lamellen 1 aufliegen, erhält man eine der Sheddach-Konfiguration aus Figur 8 entsprechende Konfiguration. Die an den zweiten Längsseiten 2b der Abdeckelemente 2 befestigten Dichtungslippen 2c können in der Sheddach-Konfiguration gleichzeitig als Dichtmittel zwischen den zweiten Längsseiten 6b der Beschattungselemente 6 und den zweiten Längsseiten 2b der Abdeckelemente 2 von benachbarten Lamellen 1 dienen. Auch hier kann ein Überlappungselement 6c entlang der zweiten Längsseite 6b der Beschattungselemente 6 vorgesehen sein.

In Figur 11 ist das Lamellendach 20 aus Figur 9 gezeigt, wobei sich die Lamellen 1 in einer Stellung befinden, in der die größtmögliche Menge an Sonnenstrahlung 25a durch die transparenten Abdeckelemente 2 der Lamellen 1 in den Innenraum 22 treten kann. Diese Stellung ist sinnvoll, wenn maximale Lichtintensität bei gleichzeitiger Lüftung gewünscht wird. Die Beschattungselemente 6 haben praktisch kaum eine beschattende Wirkung. Die Lamellen 1 sind aus der in Figur 9 gezeigten Stellung jeweils um einen Winkel β = 90° - θ, also in dem vorliegenden Beispiel um β = 25° im Uhrzeigersinn 26 verschwenkt worden. Die Längserstreckung bzw. die Erstreckungsebene 7 der Beschattungselemente 6 verläuft im Wesentlichen parallel zu den Sonnenstrahlen 25. Zwischen den Längsseiten 2a, 2b von benachbarten Lamellen 1 sind aufgrund der Schrägstellung der Lamellen 1 schlitzartige Entlüftungsöffnungen 28' gebildet, über die warme Luft 29' aus dem Innenraum 22 nach oben in die Umgebung entweichen kann.

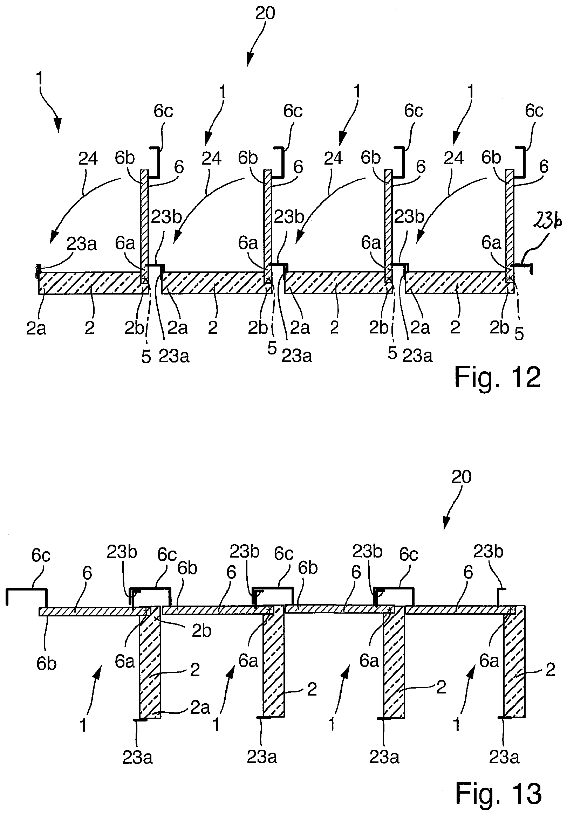

Eine besondere Variante des erfindungsgemäßen Lamellendachs 20 ist in Figur 12 in einer ersten geschlossenen Stellung im Ausschnitt dargestellt. Beispielhaft sind hier vier Lamellen 1 des Lamellendachs 20 gezeigt. Die Lamellen 1 umfassen jeweils ein transparentes Abdeckelement 2 und ein entlang einer Längsseite 2b über die gesamte Längserstreckung des Abdeckelements 2 verlaufendes Beschattungselement 6, das in einem rechten Winkel von dem Abdeckelement 2 nach außen absteht. An der ersten Längsseite 2a des Abdeckelements 2 einer Lamelle 1 ist ein Dichtungsprofil 23a in Form einer Dichtlippe angebracht, die in der ersten geschlossenen Stellung mit einem entsprechenden nach unten offenen Dichtungsprofil 23b zusammenwirkt, das an der ersten Längsseite 6a des Beschattungselements 6 einer benachbarten Lamelle 1 angeordnet ist. Auf diese Weise kann das Lamellendach 20 in der ersten geschlossenen Stellung abgedichtet werden. Dabei ist ein weitgehend transparentes Lamellendach 20 gebildet, wobei die Abdeckelemente 2 durch die Beschattungselemente 6 zumindest teilweise beschattet sind, um ein übermäßiges Aufheizen des Innenraums 22 zu verhindern.

Das Beschattungselement 6 einer Lamelle 1 ist so breit (bzw. hoch) gewählt, dass es in etwa die gleiche Breite wie das Abdeckelement 2 der entsprechenden Lamelle 1 aufweist. Durch Verschwenken der Lamellen 1 entgegen des Uhrzeigersinns 24 um etwa 90° gelangt das Beschattungselement 6 in eine im Wesentlichen horizontale Position, die in Figur 13 gezeigt ist. An den zweiten Längsseiten 6b der Beschattungselemente 6 ausgebildete Dichtungsprofile 6c greifen dabei abdichtend um die ersten Längsseiten 6a der Beschattungselemente 6 bzw. um die zweiten Längsseiten 2b der Abdeckelemente 2 von benachbarten Lamellen 1. Dabei können die Dichtungsprofile 6c die offenen Dichtungsprofile 23b übergreifen. In Figur 13 ist somit eine zweite geschlossene Stellung des Lamellendachs 20 gezeigt, in der der darunter befindliche Raum 22 durch die Beschattungselemente 6 vollständig abgeschattet ist.

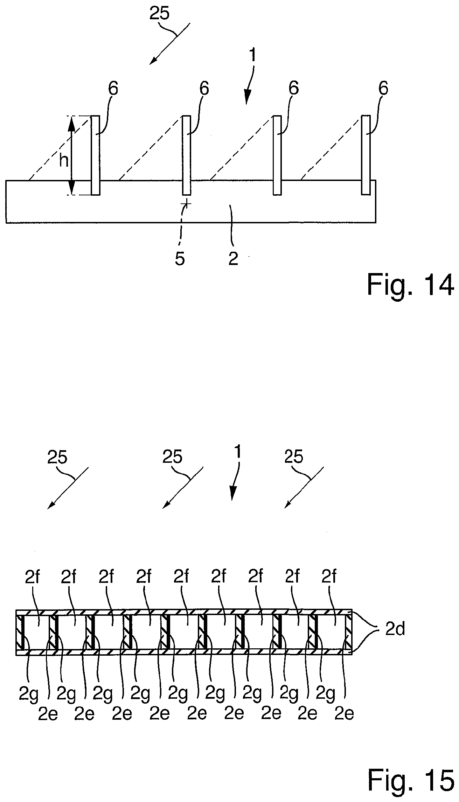

In Figur 14 ist eine besondere Ausgestaltung einer Lamelle 1 des Lamellendachs 20 gezeigt. Die Lamelle 1 weist mehrere, in dem dargestellten Beispiel vier, Beschattungselemente 6 auf, die zueinander beabstandet an dem Abdeckelement 2 angeordnet sind. Das hat den Vorteil, dass die Gesamt-Höhe einer Lamelle 1 bei einem vorgegebenen Beschattungsgrad (beschattete Fläche des Abdeckelements 2 bezogen auf die Gesamtfläche des Abdeckelements 2) niedriger gehalten werden kann. Somit ist ein Drehen der Lamelle 1 um mehr als 90° um die Drehachse 5 einfacher und besser realisierbar. In diesem Fall können die einzelnen Beschattungselemente 6 einer Lamelle 1 auch unterschiedlich ausgestaltet sein, insbesondere können sie unterschiedliche Breiten h (bzw. Höhen) aufweisen. Auch verschiedene Lamellen 1 eines Lamellendachs 20 können unterschiedlich ausgestaltete Beschattungselemente 6 aufweisen.

Eine weitere Möglichkeit, nicht Teil des beanspruchten Gegenstandes, ergibt sich, wenn das Abdeckelement 2 als eine sog. Hohlkammer- oder Stegplatte ausgebildet ist, insbesondere als eine Stegdoppelplatte, wie sie beispielhaft in Figur 15 gezeigt ist. Eine solche Platte weist zwei zueinander beabstandete und parallel zueinander angeordnete Abdeckplatten 2d auf, zwischen denen über die gesamte Länge der Lamelle 1 vorzugsweise senkrecht zu den Abdeckplatten 2d verlaufende Stege 2e angeordnet sind. Dadurch sind im Inneren des Abdeckelements 2 Hohlkammern 2f gebildet.

Hierbei wäre es denkbar, dass die Beschattungselemente 6 nicht außen an den Abdeckelementen 2 angeordnet, sondern in diese integriert sind. Dazu kann zumindest einer der Stege 2e ein Beschattungselement 6 bilden, indem das Material des Stegs 2e eingefärbt oder mit lichtundurchlässigen, -abweisenden oder-absorbierenden Partikeln versetzt ist. Auf diese Weise kann der mindestens eine Steg 2e die einfallende Sonnenstrahlung 25 zumindest teilweise vor einem Auftreffen auf die untere bzw. innere Abdeckplatte 2d des Abdeckelements 2 abhalten. In der Summe würden viele als Beschattungselemente 6 ausgebildete Stege 2e eines Abdeckelements 2 die innere Abdeckplatte 2d beschatten können. In diesem Fall könnte das Abdeckelement 2 mittels eines Koextrusionsverfahrens hergestellt werden, wobei die Abdeckplatten 2d und die Stege 2e aus unterschiedlichen Materialien bestehen können oder unterschiedliche Eigenschaften aufweisen können. Es wäre auch denkbar, den ein Beschattungselement 6 bildenden Steg 2e nach der Fertigung mit einer lichtundurchlässigen, -abweisenden oder -absorbierenden Schicht 2g zu versehen.

Es ist ferner denkbar, die Lamellen 1 automatisiert abhängig von aktuellen Witterungsbedingungen in der Umgebung des Lamellendachs 20, beispielsweise abhängig von der Außentemperatur, dem Sonnenstand θ, der Intensität der Sonnenstrahlung, der aktuellen Niederschlagssituation o.ä., oder abhängig von der Innentemperatur in dem betreffenden Raum 22 anzusteuern und zu betätigen. Die automatisierte Ansteuerung kann dabei Bestandteil einer Regelung der Temperatur und/oder der Lichtintensität im Raum 22 sein. Eine gewünschte Innentemperatur und/oder Lichtintensität kann von einem Nutzer vorgegeben werden und dient als Sollwert für die Regelung. Wenn die Innenraumtemperatur und/oder die Lichtintensität zu hoch werden, können die Lamellen 1 weiter in Richtung einer Stellung bewegt werden, in der die Beschattungselemente 6 mehr Licht abschatten (vgl. bspw. Figuren 8, 10 und 13). Wenn die Innentemperatur und/oder die Lichtintensität zu niedrig werden, d.h. den Sollwert um einen bestimmten Betrag unterschreiten, können die Lamellen 1 weiter in Richtung einer Stellung bewegt werden, in der die Beschattungselemente 6 weniger Sonnenstrahlung 25 abschatten (vgl. bspw. Figur 11).

Der Regelung kann eine Steuerung überlagert sein, welche das Lamellendach 20 unabhängig von Innentemperatur und Lichtintensität schließt (vgl. bspw. Figuren 7 bis 9, 12 und 13), wenn es die Witterungsbedingungen erfordern, bspw. wenn der Wind zu stark wird oder ein Niederschlag auftritt. Ferner kann der Regelung eine weitere Steuerung überlagert sein, welche die Lamellen 1 in der wärmeren Jahreszeit in eine Sommerstellung (vgl. Figuren 7 bis 13), in der die Beschattungselemente 6 an der Außenseite des Lamellendachs 20 angeordnet sind, also im Wesentlichen nach oben ragen, und in der kälteren Jahreszeit in eine Winterstellung bringt, in der die Beschattungselemente 6 im Wesentlichen nach unten in den Raum 22 ragen. Eine solche Steuerung ist natürlich nur möglich, wenn die Breite h der Beschattungselemente 6 so klein gewählt ist, dass ausgehend von der geschlossenen Stellung eine Drehung der Lamellen 1 um mehr als +/- 90° möglich ist.

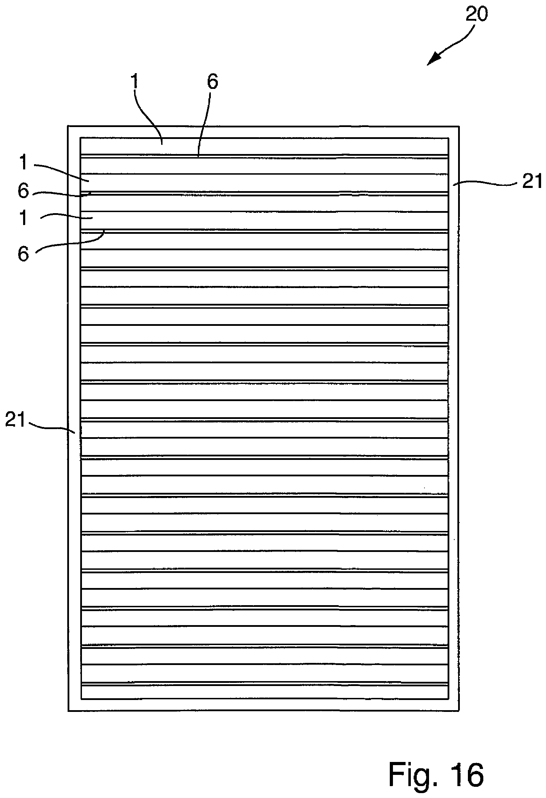

In Figur 16 ist eine Draufsicht auf ein Lamellendach 20 gemäß einer ersten bevorzugten Ausführungsform der Erfindung dargestellt. Die Lamellen 1 befinden sich in einer Sommerstellung, d.h. die Beschattungselemente 6 ragen nach oben in die Umgebung, und die Lamellen 1 sind vollständig geschlossen. Die Lamellen 1 sind an einem rechteckigen Tragrahmen 21 um Drehachsen, die entlang der Längserstreckung der Lamellen 1 verlaufen, drehbar gelagert. Der Tragrahmen 21 ist vorzugsweise feststehend, bspw. mittels Pfosten am Boden befestigt. Zwischen den Pfosten sowie zwischen dem Tragrahmen 21 und dem Boden können vollständig oder teilweise transparente und/oder vollständig lichtundurchlässige Wandelemente angeordnet sein, so dass sich bei geschlossenem Lamellendach 20 ein nach außen hin vollständig abgeschlossener Raum 22 ergibt.

Bei einem solchen Lamellendach 20 sind die Lamellen 1 für eine optimale Beschattung so ausgerichtet, dass die Längserstreckung der Lamellen 1 jeweils quer zu den Sonnenstrahlen zu einer bestimmten Tageszeit verläuft. Als Tageszeit wählt man vorzugsweise die Mittagszeit, da dann der Sonnenstandswinkel θ und die Intensität der Sonneneinstrahlung am größten ist. Alternativ ist es möglich, dass die Lamellen 1 so ausgerichtet sind, dass die Längserstreckung der Lamellen 1 in einem Winkel von bis zu +/- 45° zu den Sonnenstrahlen zu einer bestimmten Tageszeit, vorzugsweise zur Mittagszeit, verläuft.

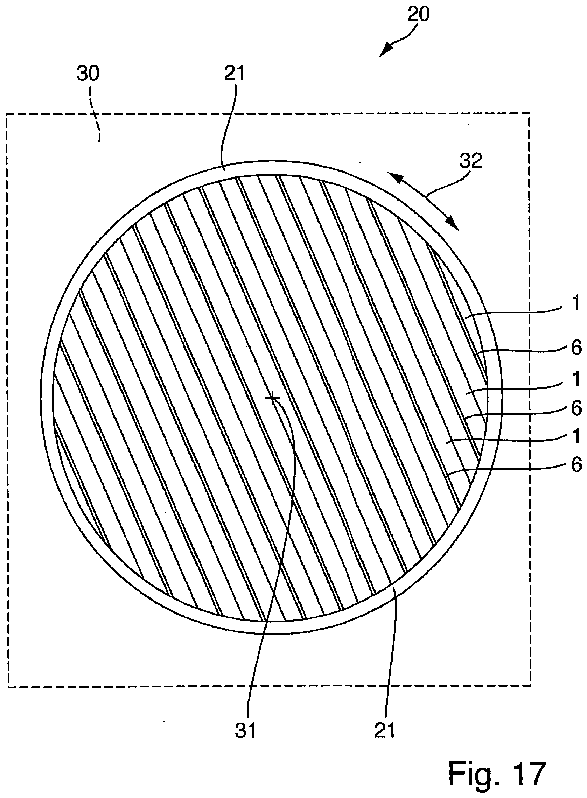

In Figur 17 ist ein weiteres Ausführungsbeispiel eines erfindungsgemäßen Lamellendachs 20 in einer Draufsicht dargestellt. Dabei hat das Lamellendach 20 eine kreisringförmige Trägerstruktur 21, an der die Lamellen 1 unterschiedlicher Länge um ihre horizontalen Drehachsen drehbar gelagert sind. Die Länge der Lamellen 1 ist so gewählt, dass sie in ihrer geschlossenen Stellung vorzugsweise die gesamte, von der Trägerstruktur 21 eingeschlossene Kreisfläche abdecken und gleichzeitig noch um ihre horizontalen Drehachsen zwischen den verschiedenen Stellungen verschwenkbar sind, ohne dass die Lamellen 1 mit ihren Abdeckelementen 2 und/oder ihren Beschattungselementen 6 mit der Trägerstruktur 21 kollidieren.

Die Trägerstruktur 21 ist ihrerseits in einer äußeren Lagerstruktur 30 um eine vertikale Drehachse 31 drehbar gelagert. Die Drehbewegung um die Achse 31 ist durch einen Pfeil 32 symbolisiert. Die Lagerstruktur 30 ist bspw. Teil eines Flachdachs o.ä. Sie kann auch eine beliebig andere als die in Figur 17 gezeigte quadratische Form, insbesondere eine zu der Drehachse 31 konzentrische kreisförmige Form aufweisen. Durch die um die Drehachse 31 drehbare Lagerung der Trägerstruktur 21 ist es möglich, die Ausrichtung der Lamellen 1 an den aktuellen Sonnenstand anzupassen, so dass die Lamellen 1 stets so ausgerichtet sind, dass die Längserstreckung der Lamellen 1 jeweils in einem vorgegebenen Winkel zu den Sonnenstrahlen zu einer bestimmten Tageszeit verläuft. Der vorgegebene Winkel beträgt für eine optimale Beschattung der Abdeckelemente 2 etwa 90°. Selbstverständlich können aber auch beliebig andere Winkel eingestellt werden. Somit verläuft die Längserstreckung der Lamellen 1 am Morgen und am Abend in etwa in Nord-Süd-Richtung, so dass eine im Osten aufgehende bzw. im Westen untergehende Sonne optimal abgeschattet werden kann. Zwischen Morgen und Abend dreht sich die Trägerstruktur 21 um etwa 180° um die Drehachse 31, so dass die Längserstreckung der Lamellen 1 bspw. mittags in West-Ost-Richtung verläuft, damit eine im Süden (auf der nördlichen Halbkugel) bzw. im Norden (auf der südlichen Halbkugel) hoch stehende Mittagssonne optimal abgeschattet werden kann. Die Drehung der Trägerstruktur 21 zusammen mit den Lamellen 1 um die Drehachse 31 erfolgt vorzugsweise motorisch und automatisiert abhängig von dem Standort des Lamellendachs 20 (nördliche oder südliche Halbkugel sowie Längengrad), der Jahreszeit (Richtung des Sonnenaufgangs und des Sonnenuntergangs), den aktuellen Wetterbedingungen (Wind, Niederschlag, etc.) und/oder der Tageszeit (Uhrzeit für den aktuellen Sonnenstand). Die Drehbewegung 32 der Trägerstruktur 21 erfolgt vorzugsweise kontinuierlich bzw. quasi-kontinuierlich in so kleinen Schritten, dass sie für Personen in dem darunter liegenden Raum kaum wahrnehmbar ist.

## Patentansprüche

1. Lamellendach (20) mit einer Trägerstruktur (21) und mehreren parallel zueinander angeordneten Lamellen (1), die jeweils um eine entlang ihrer Längserstreckung verlaufende Drehachse (5) an der Trägerstruktur (21) drehbar gelagert sind, um die Lamellen (1) zwischen einer geschlossenen Stellung und einer geöffneten Stellung zu verschwenken, wobei die Lamellen (1) jeweils ein lichtdurchlässiges flächiges Abdeckelement (2) mit einer Längserstreckung, zwei sich in Längserstreckung erstreckende Längsseiten (2a, 2b) und einer Breite (b), wobei die Breite (b) kleiner als die Längserstreckung ist, und mindestens ein zumindest teilweise lichtundurchlässiges flächiges Beschattungselement (6) mit einer Längserstreckung und einer Breite (h) aufweisen, das sich mit seiner Längserstreckung zumindest über einen Teil der Längserstreckung des Abdeckelements (2) erstreckt, das mit einer ersten Längsseite (6a) an dem Abdeckelement (2) befestigt ist und das mit einer der ersten Längsseite (6a) gegenüberliegenden zweiten Längsseite (6b) von dem Abdeckelement (2) absteht, wobei das mindestens eine Beschattungselement (6) in seiner Flächenerstreckung in einem Winkel (α) zu der Flächenerstreckung des Abdeckelements (2) angeordnet ist, wobei die Lamellen (1) in einer ersten geschlossenen Stellung, in der die ersten Längsseiten (2a) der Abdeckelemente (2) der Lamellen (1) an den zweiten Längsseiten (2b) der Abdeckelemente (2) von jeweils benachbarten Lamellen (1) aufliegen und die Beschattungselemente (6) auf der Außenseite der Abdeckelemente (2) befestigt sind und von diesen nach oben abragen, anordenbar sind, **dadurch gekennzeichnet, dass** die Position der Beschattungselemente (6) auf den Abdeckelementen (2) einerseits und die Breite (h) der Beschattungselemente (6) und die Breite (b) der Abdeckelemente (2) andererseits derart aufeinander abgestimmt sind, dass die Drehachsen (5) in eine zweite geschlossene Stellung drehbar sind, in der die zweiten Längsseiten (6b) der Beschattungselemente (6) der Lamellen (1) an den zweiten Längsseiten (2b) der Abdeckelemente (2) von jeweils benachbarten Lamellen (1) aufliegen, oder in der nach einer Drehung der Lamellen (1) um etwa 180° die zweiten Längsseiten (2b) der Abdeckelemente (2) der Lamellen (1) an den ersten Längsseiten (2a) der Abdeckelemente (2) von jeweils benachbarten Lamellen (1) aufliegen und die Beschattungselemente (6) von den Abdeckelementen (2) in einen unter dem Lamellendach (20) befindlichen Raum (22) ragen.

2. Lamellendach (20) nach Anspruch 1, **dadurch gekennzeichnet, dass** die Lamellen (1) außerdem um ihre Drehachsen (5) mindestens eine erste geöffnete Stellung einnehmen können, in der die zweiten Längsseiten (6b) der Beschattungselemente (6) der Lamellen (1) beabstandet zu den zweiten Längsseiten (2b) der Abdeckelemente (2) von jeweils benachbarten Lamellen (1) angeordnet sind und der Abstand eine erste Entlüftungsöffnung (28) bildet.

3. Lamellendach (20) nach Anspruch 1 oder 2, **dadurch gekennzeichnet, dass** die Lamellen (1) außerdem um ihre Drehachsen (5) mindestens eine zweite geöffnete Stellung einnehmen können, in der die ersten Längsseiten (2a) der Abdeckelemente (2) der Lamellen (1) beabstandet zu den zweiten Längsseiten (2b) der Abdeckelemente (2) von jeweils benachbarten Lamellen (1) angeordnet sind und der Abstand eine zweite Entlüftungsöffnung (28') bildet.

4. Lamellendach (20) nach einem der Ansprüche 1 bis 3, **dadurch gekennzeichnet, dass** die Abdeckelemente (2) der Lamellen (1) zumindest an einer ihrer Längsseiten (2a, 2b) Dichtungsmittel (23a; 23b; 2c) aufweisen, um eine Dichtigkeit des Lamellendachs (20) in der ersten geschlossenen Stellung zu erzielen.

5. Lamellendach (20) nach Anspruch 4, **dadurch gekennzeichnet, dass** die Dichtungsmittel als ineinander greifende, sich überlappende Dichtungsprofile (23a, 23b) ausgebildet sind, wobei ein erstes Dichtungsprofil (23a) an den ersten Längsseiten (2a) der Abdeckelemente (2) der Lamellen (1) und ein zweites Dichtungsprofil (23b) an den zweiten Längsseiten (2b) der Abdeckelemente (2) angeordnet ist und die Dichtungsprofile (23a, 23b) von benachbarten Lamellen (1) in der ersten geschlossenen Stellung dichtend miteinander in Eingriff treten.

6. Lamellendach (20) nach Anspruch 4, **dadurch gekennzeichnet, dass** die Dichtungsmittel als Dichtungslippen (2c) ausgebildet sind, wobei Dichtungslippen (2c) an den ersten und/oder den zweiten Längsseiten (2a, 2b) der Abdeckelemente (2) der Lamellen (1) angeordnet sind die Dichtungslippen (2c) von Lamellen (1) in der ersten geschlossenen Stellung dichtend an den der Dichtungslippe (2c) zugewandten zweiten oder ersten Längsseiten (2a, 2b) oder an den Dichtungslippen (2c) von benachbarten Lamellen (1) aufliegen.

7. Lamellendach (20) nach Anspruch 5, **dadurch gekennzeichnet, dass** die Dichtungsprofile (23a, 23b) aus einem starren Material bestehen.

8. Lamellendach (20) nach Anspruch 7, **dadurch gekennzeichnet, dass** das starre Material Kunststoff oder Metall ist.

9. Lamellendach (20) nach einem der Ansprüche 4 bis 6, **dadurch gekennzeichnet, dass** die Dichtungsmittel (23a, 23b, 2c) aus einem nachgiebig elastischen Material bestehen, vorzugsweise aus Gummi oder einem weichen Kunststoff.

10. Lamellendach (20) nach einem der Ansprüche 1 bis 9, **dadurch gekennzeichnet, dass** sich die Beschattungselemente (6) mit ihrer Längserstreckung jeweils über die gesamte Längserstreckung des Abdeckelements (2) erstrecken, an dem sie befestigt sind.

11. Lamellendach (20) nach einem der vorhergehenden Ansprüche, **dadurch gekennzeichnet, dass** die Beschattungselemente (6) dazu ausgebildet sind, eine Versteifung der Abdeckelemente (2), an denen sie befestigt sind, jeweils in einer Richtung quer zur Flächenerstreckung des Abdeckelements (2) zu bewirken.

12. Lamellendach (20) nach einem der vorhergehenden Ansprüche, **dadurch gekennzeichnet, dass** die Beschattungselemente (6) jeweils derart an einem Abdeckelement (2) befestigt sind, dass die erste Längsseite (6a) eines Beschattungselements (6) mittig zwischen zwei parallelen Längsseiten (2a, 2b) des Abdeckelements (2) verläuft, an dem das Beschattungselement (6) befestigt ist.

13. Lamellendach (20) nach einem der Ansprüche 1 bis 11, **dadurch gekennzeichnet, dass** die Beschattungselemente (6) jeweils derart an einem Abdeckelement (2) befestigt sind, dass die erste Längsseite (6a) eines Beschattungselements (6) entlang einer Längsseite (2a; 2b) des Abdeckelements (2) verläuft, an dem das Beschattungselement (6) befestigt ist.

14. Lamellendach (20) nach einem der Ansprüche 1 bis 13, **dadurch gekennzeichnet, dass** die Trägerstruktur (21) des Lamellendachs (20) kreisförmig ausgebildet ist und in ihrer Gesamtheit um eine im Wesentlichen senkrecht zu den Drehachsen (5) der Lamellen (1) durch den Kreismittelpunkt verlaufende vertikale Achse (31) drehbar ist.

## Claims

1. A slatted roof (20) with a supporting structure (21) and a plurality of slats (1) arranged parallel to one another and each mounted on the supporting structure (21) so as to be rotatable about an axis of rotation (5) extending along the longitudinal extent thereof, in order to swivel the slats (1) between a closed position and an open position, the slats (1) each comprising a flat, light-transmitting cover element (2) with a longitudinal extent, two longitudinal sides (2a, 2b) extending in the longitudinal extent and a width (b), the width (b) being less than the longitudinal extent, and at least one flat, at least partly opaque shading element (6) with a longitudinal extent and a width (h), which shading element extends with its longitudinal extent at least over part of the longitudinal extent of the cover element (2), is fastened by a first longitudinal side (6a) to the cover element (2) and projects from the cover element (2) with a second longitudinal side (6b) opposite the first longitudinal side (6a), the at least one shading element (6) being arranged in its areal extent at an angle (α) to the areal extent of the cover element (2), the slats (1) can be located in a first closed position, in which the first longitudinal sides (2a) of the cover elements (2) of the slats (1) rest against the second longitudinal sides (2b) of the cover elements (2) of respective adjacent slats (1) and the shading elements (6) are fastened to the outside of the cover elements (2) and project upwards therefrom, **characterised in that** the position of the shading elements (6) on the cover elements (2) on the one hand and the width (h) of the shading elements (6) and the width (b) of the cover elements (2) on the other hand being matched with one another in such a way that the axes of rotation (5) from the first closed position into a second closed position, in which the second longitudinal sides (6b) of the shading elements (6) of the slats (1) rest against the second longitudinal sides (2b) of the cover elements (2) of respective adjacent slats (1), or in which, once the slats (1) have been rotated by approximately 180°, the second longitudinal sides (2b) of the cover elements (2) of the slats (1) rest against the first longitudinal sides (2a) of the cover elements (2) of respective adjacent slats (1) and the shading elements (6) project from the cover elements (2) into a space (22) located beneath the slatted roof (20).

2. The slatted roof (20) according to claim 1, **characterised in that** the slats (1) may moreover adopt at least one first open position about their axes of rotation (5), in which the second longitudinal sides (6b) of the shading elements (6) of the slats (1) are arranged spaced from the second longitudinal sides (2b) of the cover elements (2) of respective adjacent slats (1) and the spacing forms a first ventilation opening (28).

3. The slatted roof (20) according to claim 1 or 2, **characterised in that** the slats (1) may moreover adopt at least one second open position about their axes of rotation (5), in which the first longitudinal sides (2a) of the cover elements (2) of the slats (1) are arranged spaced from the second longitudinal sides (2b) of the cover elements (2) of respective adjacent slats (1) and the spacing forms a second ventilation opening (28').

4. The slatted roof (20) according to one of claims 1 to 3, **characterised in that** the cover elements (2) of the slats (1) comprise sealing means (23a; 23b; 2c) at least on one of their longitudinal sides (2a, 2b), in order to ensure that the slatted roof (20) is leakproof in the first closed position.

5. The slatted roof (20) according to claim 4, **characterised in that** the sealing means are configured as mutually engaging, overlapping sealing profiles (23a, 23b), wherein a first sealing profile (23a) is arranged on the first longitudinal sides (2a) of the cover elements (2) of the slats (1) and a second sealing profile (23b) is arranged on the second longitudinal sides (2b) of the cover elements (2) and the sealing profiles (23a, 23b) of adjacent slats (1) engage sealingly with one another in the first closed position.

6. The slatted roof (20) according to claim 4, **characterised in that** the sealing means take the form of sealing lips (2c), wherein sealing lips (2c) are arranged on the first and/or the second longitudinal sides (2a, 2b) of the cover elements (2) of the slats (1), the sealing lips (2c) of slats (1) resting in the first closed position tightly against the second or first longitudinal sides (2a, 2b) facing the sealing lip (2c) or against the sealing lips (2c) of adjacent slats (1).

7. The slatted roof (20) according to claim 5, **characterised in that** the sealing profiles (23a, 23b) consist of a rigid material.

8. The slatted roof (20) according to claim 7, **characterised in that** the rigid material is plastics or metal.

9. The slatted roof (20) according to one of claims 4 to 6, **characterised in that** the sealing means (23a, 23b, 2c) consist of a resiliently elastic material, preferably of rubber or a soft plastics material.

10. The slatted roof (20) according to one of claims 1 to 9, **characterised in that** the shading elements (6) extend with their longitudinal extent in each case over the entire longitudinal extent of the cover element (2) to which they are fastened.

11. The slatted roof (20) according to one of the preceding claims, **characterised in that** the shading elements (6) are configured to bring about stiffening of the cover elements (2) to which they are fastened, in each case in a transverse direction relative to the areal extent of the cover element (2).

12. The slatted roof (20) according to one of the preceding claims, **characterised in that** the shading elements (6) are each fastened in such a way to a cover element (2) that the first longitudinal side (6a) of a shading element (6) extends centrally between two parallel longitudinal sides (2a, 2b) of the cover element (2) to which the shading element (6) is fastened.

13. The slatted roof (20) according to one of claims 1 to 11, **characterised in that** the shading elements (6) are each fastened in such a way to a cover element (2) that the first longitudinal side (6a) of a shading element (6) extends along a longitudinal side (2a; 2b) of the cover element (2) to which the shading element (6) is fastened.

14. The slatted roof (20) according to one of claims 1 to 13, **characterised in that** the supporting structure (21) of the slatted roof (20) is of circular construction and is rotatable in its entirety about a vertical axis (31) extending through the centre of the circle, substantially perpendicular to the axes of rotation (5) of the slats (1).

## Revendications

1. Toit à lamelles (20) ayant une structure porteuse (21) et plusieurs lamelles (1) agencées parallèlement les unes aux autres qui sont montées sur la structure porteuse (21) de telle sorte qu'elles puissent respectivement tourner autour d'un axe de rotation (5) qui s'étend sur leur étendue longitudinale afin de faire pivoter les lamelles (1) pour les faire passer d'une position fermée à une position ouverte, les lamelles (1) présentant respectivement un élément couvrant (2) plat transparent avec une étendue longitudinale, deux côtés longitudinaux (2a, 2b) s'étendant le long de l'étendue longitudinale et une largeur (b), ladite largeur (b) étant plus courte que l'étendue longitudinale, et au moins un élément occultant (6) plat au moins partiellement opaque avec une étendue longitudinale et une largeur (h), qui s'étend avec son étendue longitudinale au moins sur une partie de l'étendue longitudinale de l'élément couvrant (2), qui est fixé à l'élément couvrant (2) avec un premier côté longitudinal (6a) et qui dépasse de l'élément couvrant (2) avec un second côté longitudinal (6b) à l'opposé du premier côté longitudinal (6a), le au moins un élément occultant (6) étant agencé dans sa surface suivant un angle (α) par rapport à la surface de l'élément couvrant (2), les lamelles (1) peuvent être arrangés en une première position fermée dans laquelle les premiers côtés longitudinaux (2a) des éléments couvrants (2) des lamelles (1) reposent sur les seconds côtés longitudinaux (2b) des éléments couvrants (2) des lamelles (1) respectivement adjacentes, et les éléments occultants (6) sont fixés sur l'extérieur des éléments couvrants (2) et dépassent en haut de ceux-ci, **caractérisé en ce que** la position des éléments occultants (6) sur les éléments couvrants (2) d'une part et la largeur (h) des éléments occultants (6) et la largeur (b) des éléments couvrants (2) d'autre part étant coordonnées de manière à ce que les lamelles (1) peuvent tourner autour les axes de rotation (5) de la première position fermée dans une seconde position fermée dans laquelle les seconds côtés longitudinaux (6b) des éléments occultants (6) des lamelles (1) reposent sur les seconds côtés longitudinaux (2b) des éléments couvrants (2) des lamelles (1) respectivement adjacentes, ou dans laquelle, après que les lamelles (1) ont été tournées d'environ 180°, les seconds côtés longitudinaux (2b) des éléments couvrants (2) des lamelles (1) reposent sur les premiers côtés longitudinaux (2a) des éléments couvrants (2) des lamelles (1) respectivement adjacentes et les éléments occultants (6) dépassent des éléments couvrants (2) dans un espace (22) situé sous le toit à lamelles (20).

2. Toit à lamelles (20) selon la revendication 1, **caractérisé en ce que** les lamelles (1) peuvent en outre prendre au moins une première position ouverte autour de leurs axes de rotation (5), dans laquelle les seconds côtés longitudinaux (6b) des éléments occultants (6) des lamelles (1) sont agencés à distance des seconds côtés longitudinaux (2b) des éléments couvrants (2) des lamelles (1) respectivement adjacentes et l'écartement forme une première ouverture d'aération (28).

3. Toit à lamelles (20) selon la revendication 1 ou 2, **caractérisé en ce que** les lamelles (1) peuvent en outre prendre au moins une seconde position ouverte autour de leurs axes de rotation (5), dans laquelle les premiers côtés longitudinaux (2a) des éléments couvrants (2) des lamelles (1) sont agencés à distance des seconds côtés longitudinaux (2b) des éléments couvrants (2) des lamelles (1) respectivement adjacentes et l'écartement forme une seconde ouverture d'aération (28').

4. Toit à lamelles (20) selon l'une des revendications 1 à 3, **caractérisé en ce que** les éléments couvrants (2) des lamelles (1) présentent, au moins sur un de leurs côtés longitudinaux (2a, 2b), des moyens d'étanchéité (23a ; 23b ; 2c) afin d'obtenir l'étanchéité du toit à lamelles (20) dans la première position fermée.

5. Toit à lamelles (20) selon la revendication 4, **caractérisé en ce que** les moyens d'étanchéité sont conçus comme des profilés d'étanchéité (23a, 23b) se chevauchant et venant en prise l'un dans l'autre, un premier profilé d'étanchéité (23a) étant agencé sur les premiers côtés longitudinaux (2a) des éléments couvrants (2) des lamelles (1) et un second profil d'étanchéité (23b) étant agencé sur les seconds côtés longitudinaux (2b) des éléments couvrants (2) et les profilés d'étanchéité (23a, 23b) des lamelles (1) adjacentes venant en prise de manière étanche l'un avec l'autre dans la première position fermée.

6. Toit à lamelles (20) selon la revendication 4, **caractérisé en ce que** les moyens d'étanchéité sont conçus sous forme de lèvres d'étanchéité (2c), lesdites lèvres d'étanchéité (2c) étant agencées sur les premiers et/ou les seconds côtés longitudinaux (2a, 2b) des éléments couvrants (2) des lamelles (1), les lèvres d'étanchéité (2c) des lamelles (1) dans la première position fermée reposant de manière étanche sur les seconds ou premiers côtés longitudinaux (2a, 2b) tournés vers la lèvre d'étanchéité (2c) ou sur les lèvres d'étanchéité (2c) des lamelles (1) adjacentes.

7. Toit à lamelles (20) selon la revendication 5, **caractérisé en ce que** les profilés d'étanchéité (23a, 23b) sont constitués d'un matériau rigide.

8. Toit à lamelles (20) selon la revendication 7, **caractérisé en ce que** le matériau rigide est une matière plastique ou un métal.

9. Toit à lamelles (20) selon l'une des revendications 4 à 6, **caractérisé en ce que** les moyens d'étanchéité (23a, 23b, 2c) sont constitués d'un matériau élastique souple, de préférence de caoutchouc ou de matière plastique souple.

10. Toit à lamelles (20) selon l'une des revendications 1 à 9, **caractérisé en ce que** les éléments occultants (6) s'étendent avec leur étendue longitudinale respectivement sur toute la longueur longitudinale de l'élément couvrant (2) auquel ils sont fixés.

11. Toit à lamelles (20) selon l'une des revendications précédentes, **caractérisé en ce que** les éléments occultants (6) sont conçus de manière à rigidifier les éléments couvrants (2), sur lesquels ils sont fixés, respectivement dans une direction transversale à la surface de l'élément couvrant (2).

12. Toit à lamelles (20) selon l'une des revendications précédentes, **caractérisé en ce que** les éléments occultants (6) sont respectivement fixés sur un élément couvrant (2) de telle sorte que le premier côté longitudinal (6a) d'un élément occultant (6) passe au centre de deux côtés longitudinaux (2a, 2b) parallèles de l'élément couvrant (2) sur lequel est fixé l'élément occultant (6).

13. Toit à lamelles (20) selon l'une des revendications 1 à 11, **caractérisé en ce que** les éléments occultants (6) sont respectivement fixés sur un élément couvrant (2), de telle sorte que le premier côté longitudinal (6a) d'un élément occultant (6) s'étende le long d'un côté longitudinal (2a ; 2b) de l'élément couvrant (2) sur lequel est fixé l'élément occultant (6).

14. Toit à lamelles (20) selon l'une des revendications 1 à 13, **caractérisé en ce que** la structure porteuse (21) du toit à lamelles (20) est conçue de manière circulaire et peut tourner dans sa totalité autour d'un axe vertical (31) s'étendant sensiblement perpendiculairement par rapport aux axes de rotation (5) des lamelles (1) et passant par le centre du cercle.
